(19) **Europäisches Patentamt**
**European Patent Office**
**Office européen des brevets**

(11) **EP 2 192 578 A1**

(12) **EUROPEAN PATENT APPLICATION**
published in accordance with Art. 153(4) EPC

(43) Date of publication:
**02.06.2010 Bulletin 2010/22**

(51) Int Cl.:
*G10L 19/14* (2006.01)   *H04M 1/00* (2006.01)
*H04M 11/00* (2006.01)

(21) Application number: **08832555.0**

(22) Date of filing: **19.09.2008**

(86) International application number:
**PCT/JP2008/002593**

(87) International publication number:
**WO 2009/037852 (26.03.2009 Gazette 2009/13)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **21.09.2007 JP 2007246269**
**25.04.2008 JP 2008115665**

(71) Applicant: **Panasonic Corporation**
**Kadoma-shi**
**Osaka 571-8501 (JP)**

(72) Inventor: **TOSHIYUKI, Morii**
**Osaka 540-6207 (JP)**

(74) Representative: **Grünecker, Kinkeldey,**
**Stockmair & Schwanhäusser**
**Anwaltssozietät**
**Leopoldstrasse 4**
**80802 München (DE)**

(54) **COMMUNICATION TERMINAL DEVICE, COMMUNICATION SYSTEM, AND COMMUNICATION METHOD**

(57)    Provided is a communication terminal device which performs audio encoding by using downloaded audio codec while using an existing radio communication system infrastructure, a channel codec, and an error correction/detection function as they are. In the communication terminal device, if a judgment unit (103) judges that the number of bits of audio codec software downloaded from a distribution codec storage unit (161) of a base station device (160) is equal to or smaller than the number of bits of the corresponding encoding parameter of audio codec software inherent to the terminal, a codec control unit (104) encodes audio inputted from a microphone (105) by using the audio codec software downloaded from the distribution codec storage unit (161).

FIG.1

**Description**

Technical Field

The present invention relates to a communication terminal apparatus, communication system and communication method for encoding and decoding speech.

Background Art

To efficiently utilize transmission bands in mobile communication, it is essential that digital information of speech and images is compressed and encoded. Among other things, high expectations are placed in speech codec technology (encoding/decoding) utilized in mobile telephones, and there is an increasing demand for encoding technology of better sound quality than conventional efficient encoding of a high compression rate. Further, standardization is essential for public use, and research and development are active in companies all over the world.

Accompanying improvement of the speech encoding algorithm based on "CELP" (Code Excited Linear Prediction) which ingeniously appropriates vector quantization by modeling the speech uttering mechanism, quality of speech codec has improved. The scheme of the international standard employs quality codec with a less bit rate. Moreover, technical development in future is predicted to develop CELP of higher performance.

Further, speech communication needs to employ a coder and a decoder that support each other, and therefore mobile telephones such as the second generation and third generation mobile telephones and PHSs (Personal Handyphone Systems) use standardized speech codecs.

Under these circumstances, there are cases where wireless terminal apparatuses that do not originally have speech communication functions are released, using a speech codec as a softphone. Prior to this, some internet communication services provided speech communication services through a network, and wireless terminal apparatuses supporting these services have also been released. Recently, public research organizations and telecommunication carriers are advancing research and development of "software radio," which is technology of downloading software required for communication to configure a radio. This technology enables a speech codec (compression encoding/decoding of speech), which is software technology to be downloaded. Patent Document 1 discloses an example of performing communication by downloading a speech codec.

Patent Document 1: Japanese Patent Application Laid-Open No.2003-51867

Disclosure of Invention

Problems to be Solved by the Invention

However, if a codec is mounted and fixed once, communication terminal apparatuses such as mobile telephones cannot further improve speech encoding/decoding performance. Therefore, users cannot enjoy more quality communication until the next generation mobile telephone system/infrastructure is built.

Further, as for mobile telephones such as the existing second generation and third generation mobile telephones, and PHSs, the communication system, transmission channel coding and speech codec are standardized and the specifications thereof are determined, and therefore, to apply the above software radio technology, the existing wireless communication system/infrastructure, channel codec and speech codec all need to be replaced. Therefore, to apply a download-type speech codec to an existing system, communication terminal apparatuses in which speech codecs have already been installed, must use a speech codec implemented in a system that allows speech communication through widespread network connection.

Further, in error correction/detection processing applied to encoded speech data, bits are allocated to each parameter of the same codec according to bit error sensitivity of each parameter. This error correction/detection processing relates to the speech codec, and is designed to provide maximum performance using the limited number of bits. Therefore, if the codec changes by applying the download-type speech codec to an existing system, there is a possibility that the existing error correction/detection processing cannot be applied.

It is therefore an object of the present invention to provide a communication terminal apparatus, communication system and communication method for performing speech encoding using a downloaded speech codec while using an existing communication system/infrastructure, channel codec and error correcting/detecting function on a as-is basis.

Means for Solving the Problem

The communication terminal apparatus according to the present invention employs a configuration which includes: a deciding section that decides whether or not speech codec software stored in an external apparatus is suitable for downloading; and a codec controlling section that, when the deciding section decides that the speech codec software is suitable for downloading, encodes and decodes speech using the speech codec software downloaded from the external apparatus.

The communication system according to the present invention that has a communication terminal apparatus and a base station apparatus, employs a configuration which includes: the base station apparatus has a storing section that stores speech codec software; and the communication terminal apparatus has: a deciding section that decides whether or not the speech codec software is suitable for downloading; and a codec controlling section that, when the deciding section decides that the speech codec software is suitable for downloading, encodes and decodes speech using the speech codec software downloaded from the storing section.

The communication method according to the present invention includes: deciding whether or not speech codec software stored in an external apparatus is suitable for downloading; and when the speech codec software is decided to be suitable for downloading, encoding and decoding speech using the speech codec software downloaded from the external apparatus.

Advantageous Effects of Invention

The present invention can perform speech encoding using a downloaded speech codec while using an existing communication system/infrastructure, channel codec and error correcting/detecting function on a as-is basis.

Brief Description of Drawings

FIG.1 is a block diagram showing a main configuration of a wireless communication system according to Embodiment 1 of the present invention;
FIG.2 illustrates bit allocation of encoding information of the G.729 scheme based on CELP;
FIG.3 shows a memory that holds speech codec software and bit allocation information in a distribution codec storing section according to Embodiment 1 of the present invention;
FIG.4 is a block diagram showing a main configuration of a wireless communication system according to another mode of Embodiment 1 of the present invention;
FIG.5 is a block diagram showing a main configuration of a wireless communication system that has a unique codec storing section according to Embodiment 2 of the present invention;
FIG.6 is a block diagram showing a main configuration of a wireless communication system according to Embodiment 3 of the present invention;
FIG.7 is a block diagram showing a main configuration of a wireless communication system according to another mode of Embodiment 3 of the present invention;
FIG.8 is a block diagram showing a main configuration of a wireless communication system according to Embodiment 4 of the present invention;
FIG.9 is a block diagram showing a configuration inside a deciding section according to Embodiment 4 of the present invention;
FIG.10 shows an example of a distortion calculation result in a distortion calculating section according to Embodiment 4 of the present invention;
FIG.11 shows an example of the state where reference sensitivity data and sensitivity data for which a margin is taken into account are cross-checked in a sensitivity data cross-checking section according to Embodiment 4 of the present invention;
FIG.12 illustrates cross-checking of sensitivity data using sorting in a sensitivity data cross-checking section according to Embodiment 4 of the present invention;
FIG.13 illustrates bit interleaving processing in an encoder and decoder stored to function in a codec controlling section according to Embodiment 4 of the present invention;
FIG.14 is a block diagram showing a main configuration of a wireless communication system according to another mode of Embodiment 4 of the present invention;
FIG.15 illustrates an LSP quantizing method in a speech codec of the G.729 scheme;
FIG.16 illustrates an LSP quantizing method in speech codec software according to Embodiment 5 of the present invention;
FIG.17 shows a pulse position table of a fixed codebook of a speech codec of the G.729 scheme;
FIG.18 shows a pulse position table of a fixed codebook of speech codec software according to Embodiment 5 of the present invention; and

FIG.19 is a block diagram showing a configuration inside a deciding section according to Embodiment 6 of the present invention.

Best Mode for Carrying Out the Invention

Hereinafter, embodiments of the present invention will be explained in detail with reference to the accompanying drawings. Note that, although the following embodiments will be explained using a wireless communication system/ wireless terminal apparatus as an example of a communication system/communication terminal apparatus, the present invention is not limited to this, and a wired communication system/wired communication terminal apparatus, and a mixture of wired and wireless communication systems/communication terminal apparatuses are possible. Hence, in the following descriptions, parts that relate to radio communication (e.g. antennas and radio controlling section) and that are generally provided to perform radio transmission/reception, will not be described.

(Embodiment 1)

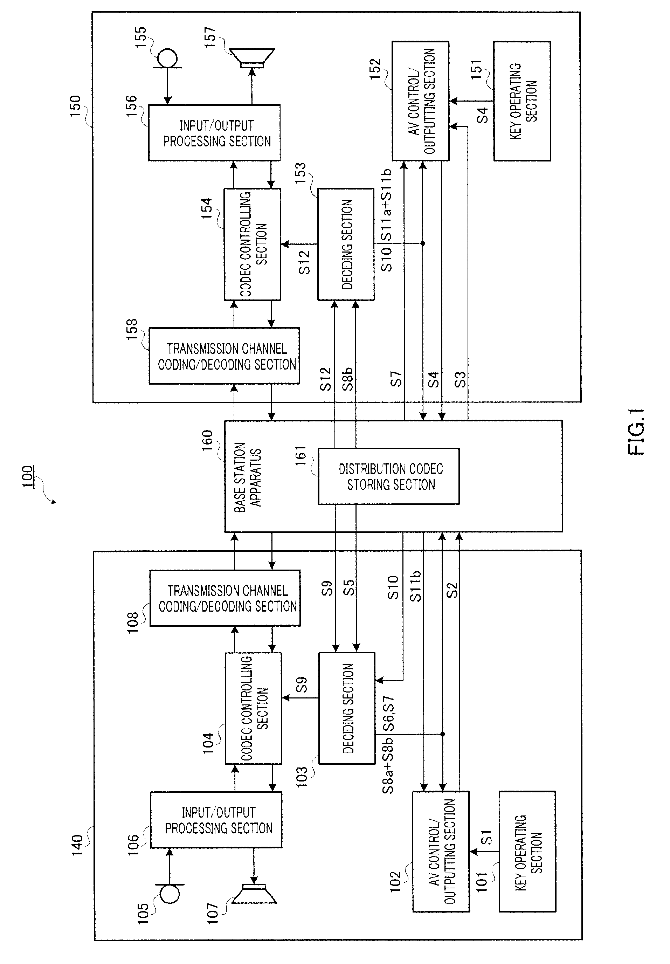

FIG.1 is a block diagram showing a main configuration of wireless communication system 100 according to Embodiment 1 of the present invention. In FIG.1, wireless communication system 100 has wireless terminal apparatus 140 of the calling side, wireless terminal apparatus 150 of the call-receiving side, and base station apparatus 160. Wireless terminal apparatus 140 has key operating section 101, AV (Audio Visual) controlling/outputting section 102, deciding section 103, codec controlling section 104, microphone 105, input/output processing section 106, speaker 107 and transmission channel coding/decoding section 108. Wireless terminal apparatus 150 has key operating section 151, AV controlling/outputting section 152, deciding section 153, codec controlling section 154, microphone 155, input/output processing section 156, speaker 157 and transmission channel coding/decoding section 158. Base station apparatus 160 has distribution codec storing section 161.

Generally, the configurations and possible operations are the same between the components (e.g. deciding section 103) of wireless terminal apparatus 140 and the corresponding components (e.g. deciding section 153) of wireless terminal apparatus 150. Accordingly, the configurations and operations required on the calling side will be explained below using the components of wireless terminal apparatus 140, and the configurations and operations required on the call-receiving side will be explained using the components of wireless terminal apparatus 150.

Key operating section 101 in wireless terminal apparatus 140 of the calling side converts the telephone number or the type of the speech codec software of wireless terminal apparatus 150 of the communicating party (i.e. call-receiving side) that is inputted by the key input from the user, into an electrical signal, and outputs the signal to AV controlling/ outputting section 102.

AV controlling/outputting section 102 displays, for example, the telephone number or the type of speech codec software received as input from key operating section 101, and transmits it to base station apparatus 160 where necessary. Further, AV controlling/outputting section 102 displays the decision result in deciding section 103, or the decision result and so on in deciding section 153 of wireless communication terminal apparatus 150 of the communicating party that has been transmitted through base station apparatus 160.

Key operating section 151 of wireless terminal apparatus 150 of the call-receiving side converts the user's key operations into electrical signals when a call is received from wireless terminal apparatus 140 of the communicating party (i.e. calling side), and outputs the signals to AV controlling/outputting section 152.

In response to a call or information received from wireless terminal apparatus 140, AV controlling/outputting section 152 displays a telephone number or received information, and outputs a ring tone. Further, when keys in key operating section 151 are operated to check an incoming call, AV controlling/outputting section 152 displays required information in response to this key operation, and reports to base station apparatus 160 that communication is established and so on.

Deciding section 103 and deciding section 153 decide whether or not speech codec software matching an identification number that is received as input in deciding section 103 and deciding section 153 can be stored in codec controlling section 104 and codec controlling section 154, based on bit allocation information received as input in deciding section 103 and deciding section 153. Then, deciding section 103 and deciding section 153 output decision results to AV controlling/outputting section 102 and AV controlling/outputting section 152, and also to base station apparatus 160. In case where the decision results indicate that storage is possible, speech codec software is downloaded from distribution codec storing section 161, and stored in codec storing section 104 and codec storing section 154. Further, the details of the decision processings in deciding section 103 and deciding section 153 will be described later.

Codec controlling section 104 of wireless terminal apparatus 140 of the calling side stores the speech codec software downloaded from base station apparatus 160 through deciding section 103. Then, codec controlling section 104 performs encoding processing of a digital speech signal received as input from input/output processing section 106, using the stored speech codec software, and outputs the resulting encoded speech data to transmission channel coding/decoding section 108. Further, codec controlling section 104 performs decoding processing of the encoded speech data received as input from transmission channel coding/decoding section 108, using the stored speech codec software, and outputs resulting speech decoding information to input/output processing section 106. Codec controlling section 154 of wireless terminal apparatus 150 of the call-receiving side performs the same operation in wireless terminal apparatus 150.

Microphone 105 and microphone 155 convert speech received as input from the users, into electrical signals, and input the electrical signals to input/output processing section 106 and input/output processing section 156.

Input/output processing section 106 of wireless terminal apparatus 140 of the calling side performs filtering and A/D conversion of the speech signal received as input from microphone 105, and outputs the resulting digital speech signal to codec controlling section 104. Further, input/output processing section 106 performs D/A conversion and filtering processing of speech decoding information received as input from codec controlling section 104, and outputs the resulting decoded speech signal to speaker 107. Input/output processing section 156 of wireless terminal apparatus 150 of the call-receiving side performs the same operation in wireless terminal apparatus 150.

Speaker 107 and speaker 157 each convert the decoded speech signal received as input from input/output processing section 106 and input/output processing section 156, into speech, and outputs the speech to the outside.

Transmission channel coding/decoding section 108 of wireless terminal apparatus 140 of the calling side performs bit error processing that includes addition of error correction bits and interleaving, and channel coding processing of encoded speech data received as input from codec controlling section 104, and transmits the resulting transmission information to wireless terminal apparatus 150 of the communicating party through base station apparatus 160 that functions as a relaying apparatus. Further, transmission channel coding/decoding section 108 performs channel coding, and bit error processing such as deinterleaving, error detection and error correction of the transmission information transmitted through base station apparatus 160, and outputs the resulting encoded speech data to codec controlling section 104. Here, error detection processing and error correction processing in transmission channel coding/decoding section 108 are designed in advance according to bit sensitivity of each encoding information, importance of information and the total number of bits. Transmission channel coding/decoding section 158 of wireless terminal apparatus 150 of the call-receiving side also performs the same operation in wireless terminal apparatus 150.

The operation for establishing a communication link in wireless communication system 100 will be explained using an example of a case where wireless terminal apparatus 140 calls wireless terminal apparatus 150.

First, key operating section 101 in wireless terminal apparatus 140 converts the telephone number of wireless terminal apparatus 150 of the communicating party received as input from the user, into an electrical signal, and outputs the signal to AV controlling/outputting section 102 (S1).

Next, AV controlling/outputting section 102 displays the telephone number received as input from key operating section 101, and further transmits the telephone number to base station apparatus 160 (S2).

Next, base station apparatus 160 reports the telephone number of wireless terminal apparatus 140 to AV controlling/outputting section 152 of wireless terminal apparatus 150 (S3).

Next, AV controlling/outputting section 152 displays the telephone number reported from base station apparatus 160 and further outputs a ring tone to call for the attention of the user who is called.

Next, in response to the ring tone or displayed telephone number outputted from AV controlling/outputting section 152, the user who checked an incoming call operates key operating section 151 to report that communication is established, to base station apparatus 160 through AV controlling/outputting section 152 (S4).

Next, base station apparatus 160 receives a notice that communication is established, from key operation 151, and outputs bit allocation information matching one of a plurality of items of speech codec software stored in distribution codec storing section 161, to deciding section 103 of wireless terminal apparatus 140 (S5). Note that distribution codec storing section 161 may also select one of a plurality of items of stored speech codec software based on the type of the codec specified by key operating section 101 of wireless terminal apparatus 140. Further, details of bit allocation information will be described later.

Next, deciding section 103 decides whether or not the speech codec software having the bit allocation received as input from distribution codec storing section 161 can be stored in codec controlling section 104, based on the bit allocation information received as input from distribution codec storing section 161.

Deciding section 103 selects the type of other speech codec software when deciding that the speech codec software received as input from distribution codec storing section 161 cannot be stored in codec controlling section 104, and reports the identification number of this software to base station apparatus 160 (S6). Base station apparatus 160 outputs bit allocation information of the speech codec matching the identification number reported from deciding section 103, to deciding section 103 from distribution codec storing section 161 (S5). Further, in case where there are no more options other than the above, deciding section 103 outputs a message indicating that there are no more options, to AV controlling/outputting section 102, and outputs this message to AV controlling/outputting section 152 through base station apparatus 160 (S7). In this case, communication is not established and the task is finished.

On the other hand, when deciding that the speech codec software received as input from distribution codec storing section 161 can be stored in codec controlling section 104, deciding section 103 selects and outputs the identification number of the speech codec software having this bit allocation, to distribution codec storing section 161 (S8a). Further, deciding section 103 downloads the speech codec software matching the identification number from distribution codec storing section 161, and stores the speech codec software in codec controlling section 104 (S9). At the same time, deciding section 103 reports the bit allocation information of the stored speech codec software and the identification number of this software, as the decision result indicating that "storage is possible," to deciding section 153 through base station apparatus 160 (S8b).

Deciding section 153 decides whether or not the speech codec software matching the reported identification number can be stored in codec controlling section 154, based on the reported bit allocation information.

When deciding section 153 decides that "storage is not possible," deciding section 153 reports the decision result to deciding section 103 through base station apparatus 160 (S10). Deciding section 103 that received the decision result that "storage is not possible" from deciding section 153, selects another speech codec, and reports the identification number of this software to base station apparatus 160 (S6). The same operation described above will be performed subsequently.

By contrast with this, when deciding section 153 decides that "storage is possible," deciding section 153 of wireless terminal apparatus 150 outputs the identification number of this software to distribution codec storing section 161 (S11a) downloads the speech codec software matching the identification number from distribution codec storing section 161, and stores the speech codec software in codec controlling section 154 through deciding section 153 (S12). At the same time, deciding section 153 outputs the decision result that "communication is established," to AV controlling/outputting section 152 and to AV controlling/outputting section 102 through base station apparatus 160 (S11b).

Note that the timing to download speech codec software to codec controlling section 104 of wireless terminal apparatus 140 may be the timing when AV controlling/outputting section 102 receives the decision result that "communication is established" after deciding section 153 of wireless terminal apparatus 150 decides that storage is possible.

When the above operation finishes downloading the speech codec software in codec controlling section 104 and codec controlling section 154, a communication link is established between wireless terminal apparatus 140 and wireless terminal apparatus 150. Then, wireless terminal apparatus 140 and wireless terminal apparatus 150 make a telephone call through the operations of microphone 105, microphone 155, speaker 107, speaker 157, codec controlling section 104, codec controlling section 154, transmission channel coding/decoding section 108, transmission channel coding/decoding section 158 and base station apparatus 160.

Hereinafter, the details of bit allocation information of speech codec software will be explained.

The bit allocation information of speech codec software supports a speech codec, and will be explained using a speech codec as an example that is standardized by the standards body such as ITU-T (International Telecommunication Union Telecommunication Standardization Sector), ARIB (Association of Radio Industries and Businesses) and ETSI (European Telecommunications Standards Institute). To be more specific, the G.729 scheme of the ITU-T standard used in Japanese mobile telephones and IP (Internet Protocol) telephones will be used as an example for explanation. The G.729 scheme of the ITU-T standard is based on CELP coding.

The speech codec of the CELP scheme divides a speech signal into frames of certain time intervals of about 10 to 20 milliseconds, performs a linear prediction analysis to find linear prediction coefficients ("LPCs") and linear prediction residuals, and individually encodes the linear prediction coefficients and linear prediction residual vectors. The speech codec of the CELP scheme encodes/decodes linear prediction residuals using an adaptive codebook that stores excitation signals generated in the past and a fixed codebook that stores a specific number of vectors of fixed shapes (i.e. fixed code vectors). The adaptive codebook is used to represent the periodic components included in a liner prediction residual vector, and the fixed codebook is used to represent the non-periodic components of a linear prediction residual vector that cannot be represented by the adaptive codebook.

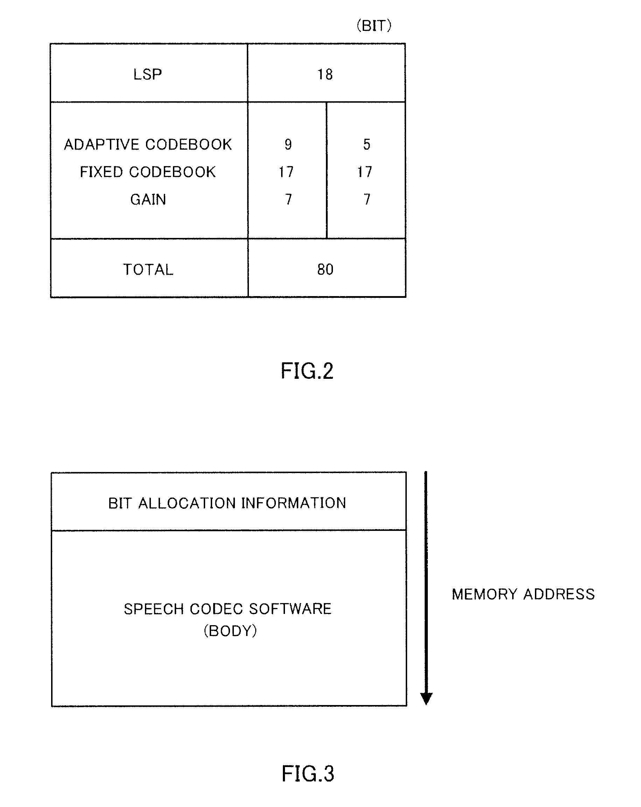

FIG.2 illustrates bit allocation of encoding information of the G.729 scheme based on CELP. With the G.729 scheme based on CELP, encoding information corresponding to a frame length of 10 milliseconds (i.e. 80 samples) is formed with 80 bits (bit rate: 8 kbit/sec). As shown in FIG.2, LSP (Line Spectrum Pair) which is an alternative parameter for LPC is encoded using 18 bits. Information about the adaptive codebook, fixed codebook and gain is encoded in a subframe obtained by dividing one frame into two. For example, a full search of the adaptive codebook is performed in the first subframe using 9 bits, and the difference (i.e. delta lag) between the second subframe and the lag of the first subframe is encoded using 5 bits. The fixed codebook is formed with algebraic excitations, and a fixed codebook vector of one subframe is represented by four pulses. The gain is encoded using 7 bits each in the two subframes.

The bit allocation information representing bit allocation of encoding information shown in FIG.2 is {18, 9, 5, 17, 17, 7, 7}. Distribution codec storing section 161 holds this bit allocation information in addition to speech codec software bodies.

FIG.3 shows a memory that holds speech codec software (i.e. body) and bit allocation information in distribution codec storing section 161.

In decision processing, without reading the speech codec software body in distribution codec storing section 161, deciding section 103 and deciding section 153 decide whether or not speech codec software can be stored in codec controlling section 104 and codec controlling section 154, based only on bit allocation information having a smaller amount of data. This saves the memory and reduces the amount of processing.

The details of decision processings in deciding section 103 and deciding section 153 will be explained.

Using the following two conditions of decision, deciding section 103 and deciding section 153 decide whether or not it is possible to store the speech codec software from distribution codec storing section 161, in codec controlling section 104 and codec controlling section 154, and let the speech codec software function.

The first condition is that the total number of bits outputted from the encoder does not exceed the number of information bits that can be transmitted by wireless communication system 100. The second condition is that bit error processing including addition of error correction bits and interleaving in wireless communication system 100 can be used on a as-is basis. To be more specific, the second condition is that the number of bits of each parameter outputted from the encoder of distribution codec storing section 161 does not exceed the number of bits of each parameter outputted from the standard codec that supports bit error processing in wireless communication system 100. Deciding section 103 and deciding section 153 decide the above two conditions based on the bit allocation information received as input from distribution codec storing section 161.

To be more specific, deciding section 103 and deciding section 153 compare parameters and compare addition values of the parameters for the bit allocation information of the speech codec software that can be stored in codec controlling section 104 and codec controlling section 154 and the bit allocation information received as input from distribution codec storing section 161 of base station apparatus 160. An example of a case is assumed here where the bit allocation information of the speech codec software that can be stored in codec controlling section 104 and codec controlling section 154 is B1 = {18, 9, 5, 17, 17, 7, 7} as shown in FIG.2, and the bit allocation information received as input from distribution codec storing section 161 of base station apparatus 160 is B2 = {18, 9, 5, 16, 16, 7, 7}. In such a case, the addition value (78) of parameters forming B2 is equal to or less than the addition value (80) of parameters forming B1, and therefore deciding section 103 and deciding section 153 decide that the first condition is satisfied. Further, for example, in case where the number of bits outputted from the standard codec that supports the bit error processing in wireless communication system 100 is B1 = {18, 9, 5, 17, 17, 7, 7}, the parameters forming B2 are equal to or less than the parameters forming B1, and therefore deciding section 103 and deciding section 153 decide that the second condition is satisfied. In this way, in case where the first condition and the second condition are satisfied at the same time, deciding section 103 and deciding section 153 decide that it is possible to store the speech codec software stored in distribution storing section 161, in codec controlling section 104 and codec controlling section 154, and let the speech codec software function.

As described above, with the present embodiment, the wireless terminal apparatus uses speech codec software by downloading it from the base station apparatus without using a fixed speech codec. Therefore, by updating the speech codec software stored in the base station apparatus to speech codec software of good performance without additionally purchasing wireless terminal apparatuses in which a standardized speech codec of the next generation speech communication is mounted, the wireless terminal apparatuses can use a speech codec of better performance by downloading it and enjoy quality speech communication.

Further, according to the present embodiment, wireless terminal apparatuses use speech codec software by downloading it from the base station apparatus without using a fixed speech codec. Therefore, by updating speech codec software stored in the base station apparatus to speech codec software of good performance without replacing a wireless communication system/infrastructure, channel codec and speech codec, the wireless terminal apparatuses can use a speech codec of better performance by downloading it and enjoy quality speech communication.

Further, according to the present embodiment, wireless terminal apparatuses can use a speech codec that is not standardized and use speech codec software by downloading it from the base station, and, consequently, as long as varieties of speech codec software stored in the base station are abundant, even if encoding information is observed along the way, communication is not tapped easily, so that it is possible to improve security for speech communication.

Further, according to the present embodiment, telecommunication carriers can manufacture and sell communication terminal apparatuses in which speech codecs are not mounted, so that users can purchase cheap communication terminal apparatuses and it is possible to improve flexibility of use in speech communication service.

In the above description, although, after decision processing in deciding section 103 of wireless terminal apparatus 140 of the calling side, deciding section 153 of wireless terminal apparatus 150 of the call-receiving side performs decision processing, that is, the configurations and operations of performing decision processing in wireless terminal apparatus 140 and performing decision processing in wireless terminal apparatus 150 serially in time and alternately have been explained, it is equally possible to perform decision processing in wireless terminal apparatus 140 and perform decision processing in wireless terminal apparatus 150 in parallel in time. Hereinafter, an example of a configuration and operation in another mode of the present embodiment will be explained.

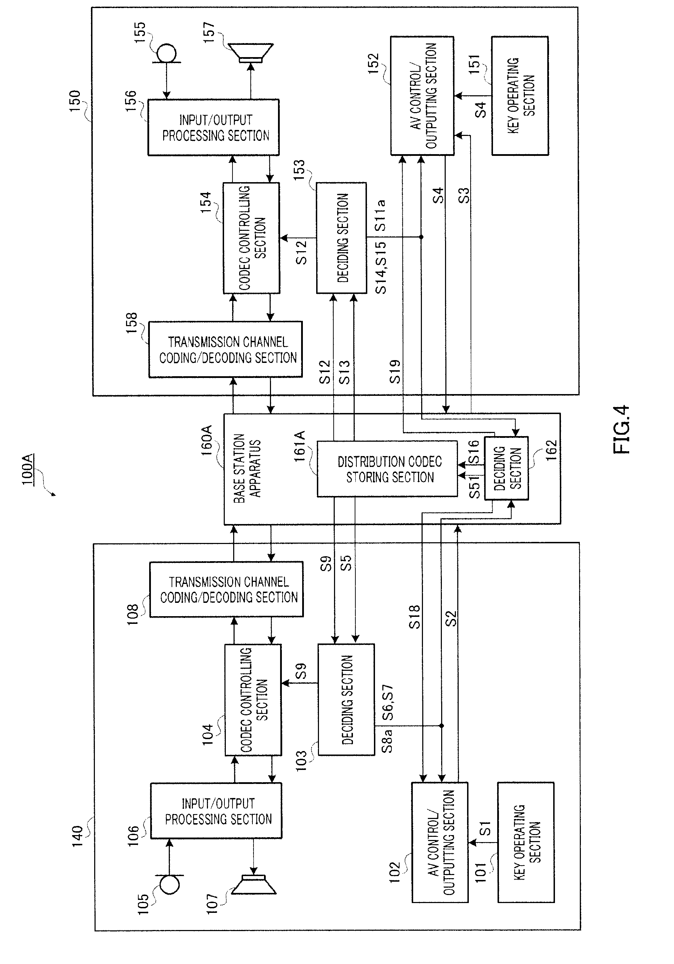

FIG.4 is a block diagram showing a main configuration of wireless communication system 100A that can perform decision processing in wireless terminal apparatus 140 and perform decision processing in wireless terminal apparatus 150 in parallel in time. Note that wireless communication system 100A has the same basic configuration as wireless communication system 100 shown in FIG.1, and the same components will be assigned the same reference numerals and explanation thereof will be omitted.

Wireless communication system 100A differs from wireless communication system 100 in further having deciding section 162 inside base station apparatus 160A. Therefore, different configurations and operations from base station apparatus 160 and distribution codec storing section 161 of wireless communication system 100 will be assigned different reference numerals to distinguish between these differences.

The operations from the operation of outputting (S1) an electrical signal from key operating section 101 by the user, to AV controlling/outputting section 102 in wireless terminal apparatus 140 of the calling side, to the operation of reporting (S4) that communication is established, from key operating section 151 to base station apparatus 160A through AV controlling/outputting section 152 in wireless terminal apparatus 150 of the call-receiving side, are the same as in the explanation of above FIG.1.

When receiving a notice that communication is established, base station apparatus 160A outputs bit allocation information matching one of a plurality of items of speech codec software stored in distribution codec storing section 161 A, to deciding section 103 and deciding section 153 (S5 and S13).

Next, deciding section 103 and deciding section 153 each perform decision processing. The details of decision processing are the same as in the explanation of above FIG.1, and therefore will not be explained. Then, the decision results (S6, S7, S8a, S14, S15 and S11a) in the deciding sections are received as input in deciding section 162 inside base station apparatus 160A. S14 and S15 in wireless terminal apparatus 150 correspond to S6 and S7, respectively, in wireless terminal apparatus 140. Further, S6 and S14 only need to be information that simply indicates decision results that "storage is not possible."

Deciding section 162 of base station apparatus 160A compares the decision result received as input from deciding section 103 and the decision result received as input from deciding section 153, and, if at least one of decision results indicates that "storage is not possible," deciding section 162 selects another speech codec software and reports the identification number of this software to distribution codec storing section 161A (S16). Distribution codec storing section 161A outputs bit allocation information of the speech codec software matching the identification number, to deciding section 103 and deciding section 153 (S5 and S13). Subsequently, the same operations described above are repeated until both of decision results indicate that "storage is possible."

If the decision result received as input from deciding section 103 and the decision result received as input from deciding section 153 both indicate that "storage is possible" (S8a and S11a), deciding section 162 of base station apparatus 160A reports the identification number of this software to distribution codec storing section 161A (S51). Distribution codec storing section 161A outputs the speech codec software matching the identification number, to both of deciding section 103 and deciding section 153 (S9 and S12), and deciding section 103 and deciding section 153 output the software to codec controlling section 104 and codec controlling section 154 (S9 and S12). Further, if both of decision results indicate that "storage is possible," deciding section 162 further reports the decision result that "communication is established," to both of AV controlling/outputting section 102 and AV controlling/outputting section 152 (S18 and S19).

As described above, it is possible to perform decision processing in wireless terminal apparatus 140 of the calling side and perform decision processing in wireless terminal apparatus 150 of the call-receiving side in parallel in time, and its advantage is the same as in the case where decision processings are performed serially in time.

(Embodiment 2)

Although a case has been explained with Embodiment 1 where speech codec software is used by downloading it from the base station apparatus every time speech communication takes place between wireless terminal apparatuses, the present invention is not limited to this, and the wireless terminal apparatus of the calling side can use for subsequent telephones calls the speech codec software downloaded from the base station apparatus by storing the speech codec software in unique codec storing sections (described later). A specific example will be explained below.

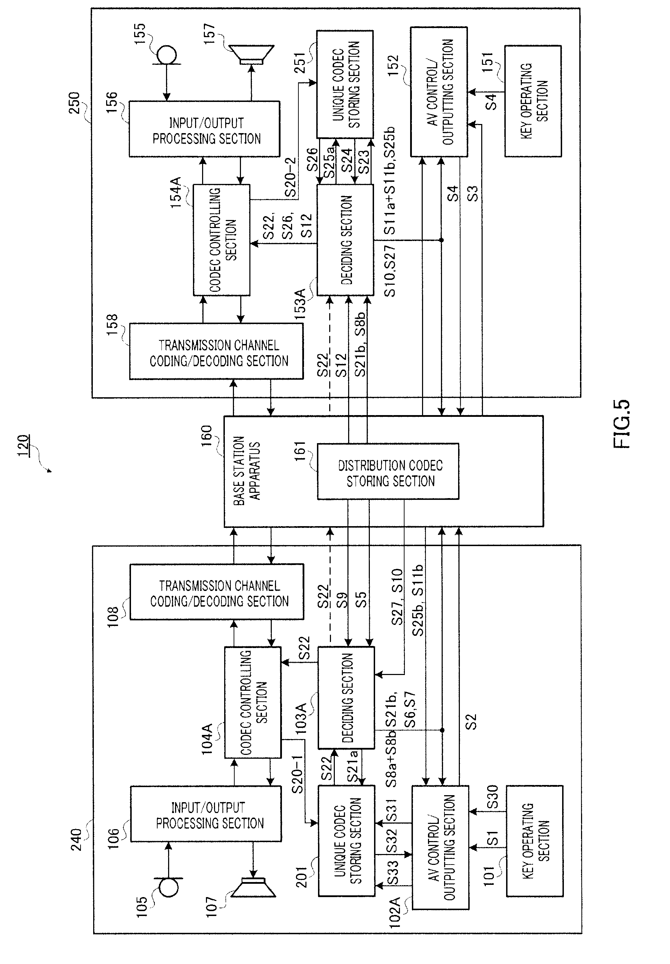

FIG.5 is a block diagram showing a main configuration of wireless communication system 120 in which wireless terminal apparatuses have unique codec storing sections. In FIG.5, different reference numerals will be assigned to show the differences between the configurations of wireless terminal apparatus 140, AV controlling/outputting section 102, deciding section 103, codec controlling section 104, wireless terminal apparatus 150, deciding section 153, and codec controlling section 154 in FIG.1 and the configurations of wireless terminal apparatus 240, AV controlling/outputting section 102A, deciding section 103A, codec controlling section 104A, wireless terminal apparatus 250, deciding section 153A, and codec controlling section 154A. Further, wireless communication system 120 has the same basic configuration as wireless communication system 100 shown in FIG.1, and the same components will be assigned the same reference numerals and explanation thereof will be omitted.

Wireless terminal apparatus 240 of the calling side further has unique codec storing section 201, and this unique codec storing section 201 stores the speech codec software used in the previous telephone call (S20-1). Similarly, wireless terminal apparatus 250 of the call-receiving side further has unique codec storing section 251 that stores the speech codec (S20-2) used in the previous telephone call.

This wireless communication system 120 allows deciding section 103A of wireless terminal apparatus 240 of the calling side to report the speech codec software used in the previous telephone call preferentially over speech codec software of other types, to base station apparatus 160, and allows base station apparatus 160 to make wireless terminal apparatus 250 download the speech codec of the same type. This configuration and operation will be explained below.

The operations from the operation of outputting (S1) an electrical signal from key operating section 101 by the user, to AV controlling/outputting section 102A in wireless terminal apparatus 240 of the calling side, to the operation of reporting (S4) that communication is established, from key operating section 151 to base station apparatus 160A through AV controlling/outputting section 152 in wireless terminal apparatus 250 of the call-receiving side, are the same as in the explanation of above FIG.1.

When receiving a notice that communication is established, base station apparatus 160 outputs bit allocation information matching one of a plurality of items of speech codec software stored in distribution codec storing section 161, to deciding section 103A (S5).

When receiving the bit allocation information from distribution codec storing section 161, deciding section 103A outputs a command for acquiring a stored speech codec software, to unique codec storing section 201 (S21a), and, in response to this, unique codec storing section 201 stores the stored speech codec software in codec controlling section 104A through deciding section 103A (S22). Together with this, deciding section 103A reports the identification number of speech codec software stored in unique codec storing section 201 and bit allocation information of this software, to deciding section 153A through base station apparatus 160 as unique codec information (S21b).

If wireless terminal apparatus 250 of the call-receiving side has unique codec storing section 251, deciding section 153A decides whether or not speech codec software matching the identification number included in the reported unique codec information, can be stored in codec controlling section 154A, based on the bit allocation information included in the reported unique codec information. The method of making decisions is the same as in the method disclosed in Embodiment 1. If it is decided that the specified speech codec software can be stored in codec controlling section 154A, deciding section 153A transmits a signal for checking whether or not the specified speech codec software is stored in unique codec storing section 251, to unique codec storing section 251 (S23), and receives a response signal in response to that signal from unique codec storing section 251 (S24). If content of the response signal indicates that the specified software is included in unique codec storing section 251, deciding section 153A outputs a command for acquiring a stored speech codec software, to unique codec storing section 251 (S25a), and, in response to this, unique codec storing section 251 stores the speech codec software to codec controlling section 154A through deciding section 153A (S26). Together with this, deciding section 153A outputs the decision result that "communication is established," to AV controlling/outputting section 152, and to AV controlling/outputting section 102A, through base station apparatus 160 (S25b). That is, if the same type of a speech codec is stored in unique codec storing section 201 and unique codec storing section 251, the wireless terminal apparatuses both do not need to download a speech codec.

By contrast with this, in case where the content of a response signal (S24) from unique codec storing section 251 indicates that the specified software is not included, deciding section 153A transmits the identification number of the specified software, to distribution codec storing section 161 (S27). If the speech codec software matching this identification number is present in distribution codec storing section 161, deciding section 153A downloads this speech codec software from distribution codec storing section 161, and stores this speech codec software in codec controlling section 154A through deciding section 153A. The subsequent processings are the same as described above. On the other hand, if the software matching that identification number is not present in distribution codec storing section 161, base station apparatus 160 transfers this identification number to deciding section 103A (S27), and, when receiving this identification number, deciding section 103A extracts speech codec software from unique codec storing section 201 (S22) and transmits the speech codec software to deciding section 153A through base station apparatus 160 (S22: broken line). Deciding section 153A stores the received software in codec controlling section 154A. The subsequent processings are the same as described above.

Further, if the decision result in deciding section 153A indicates that "storage is not possible," the speech codec software stored in unique codec storing section 201 cannot be used, and deciding section 153A reports the decision result that "storage is not possible," to deciding section 103A through base station apparatus 160, and the subsequent operations of deciding section 153A are the same as in Embodiment 1.

Further, although a case has been explained above where the wireless terminal apparatus of the call-receiving side has a unique codec storing section, even in case where the wireless terminal apparatus of the call-receiving side does not have a unique codec storing section, if the deciding section decides that speech codec software can be stored in the codec controlling section, it is possible to download required speech codec software either from distribution codec storing section 161 of base station apparatus 160 or from unique codec storing section 201 of wireless terminal apparatus 240 of the calling side, to store and use the speech codec software in the codec controlling section.

This wireless communication system allows wireless terminal apparatuses to use a speech codec of good performance by downloading it from the base station even when, for example, communication quality needs to be further improved. By this means, it is possible to reduce the amount of processing required in every telephone call.

Further, the wireless terminal apparatus according to the present embodiment allows users to edit details of speech codec software stored in unique codec storing section 201, through key operating section 101. For example, the user commands AV controlling/outputting section 102A to start editing through key operating section 101 (S30), AV controlling/outputting section 102A extracts speech codec software stored in unique codec storing section 201 (S31 and S32), and the user edits the software by operating keys (S30) and stores the edited speech codec software in unique codec storing section 201 adequately (S33). As described above, basically, speech codec software edited in one wireless terminal apparatus is not present in the other terminals and base station at the time of editing, and therefore, to use the edited software, it is necessary to first transmit the edited speech codec software to the wireless terminal apparatus of the communicating party. The wireless terminal apparatus of the communicating party decides whether or not the edited speech codec software that is transmitted can be stored, and, if a decision result that "storage is possible" is obtained, can use this edited speech codec software.

This configuration enables speech codec software to be used by modifying it to improve quality where necessary.

(Embodiment 3)

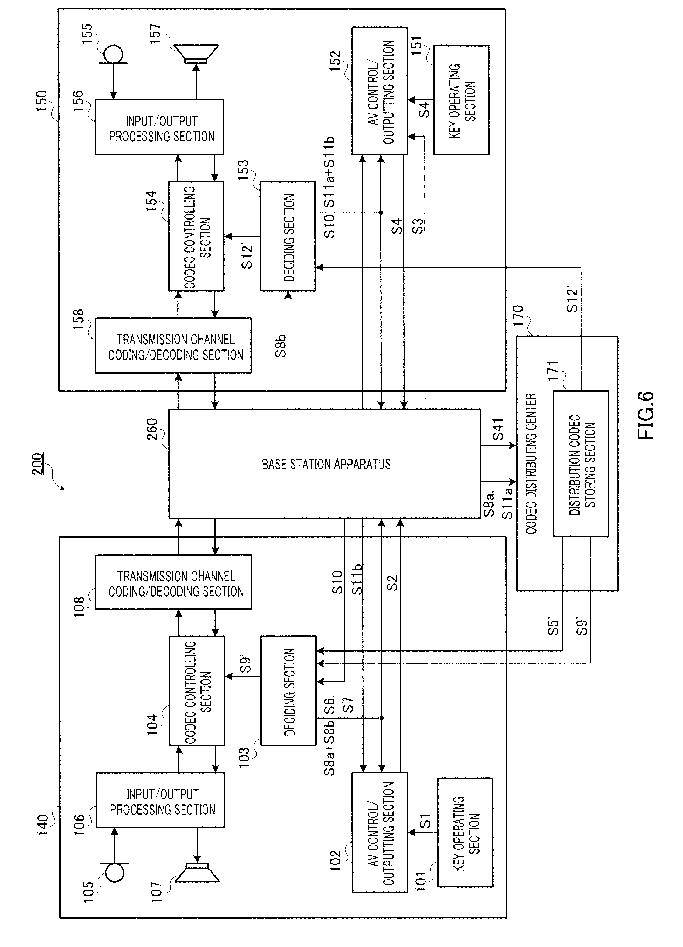

FIG.6 is a block diagram showing a main configuration of wireless communication system 200 according to Embodiment 3 of the present invention. Note that wireless communication system 200 has the same basic configuration as wireless communication system 100 (see FIG.1) described in Embodiment 1, and the same components will be assigned the same reference numerals and explanation thereof will be omitted.

Wireless communication system 200 differs from wireless communication system 100 in further having codec distributing center 170. Further, base station apparatus 260 of wireless communication system 200 differs from base station apparatus 160 of wireless communication system 100 in removing distribution codec storing section 161, and will be assigned a different reference numeral to indicate this difference.

Codec distributing center 170 has distribution codec storing section 171. Distribution codec storing section 171 stores a plurality of items of speech codec software to which bit allocation information is added. Codec distributing center 170 receives a notice related to establishment of communication, from key operating section 151 through base station apparatus 260 (S41), and outputs bit allocation information matching one of a plurality of items of speech codec software stored in distribution codec storing section 171, to deciding section 103 (S5'). Here, distribution codec storing section 171 may select one of a plurality of items of stored speech codec software, based on the type of the codec specified by key operating section 101 of wireless terminal apparatus 140. The subsequent processings are the same as in Embodiment 1.

As described above, according to the present embodiment, it is possible to acquire the same advantage as in Embodiment 1.

In the above description, although, after decision processing in deciding section 103 of wireless terminal apparatus 140 of the calling side, deciding section 153 of wireless terminal apparatus 150 of the call-receiving side performs decision processing, that is, the configurations and operations of performing decision processing in wireless terminal apparatus 140 and performing decision processing in wireless terminal apparatus 150 serially in time and alternately have been explained, it is equally possible to perform decision processing in wireless terminal apparatus 140 and perform decision processing in wireless terminal apparatus 150 in parallel in time. Hereinafter, an example of a configuration and operation in another mode of the present embodiment will be explained.

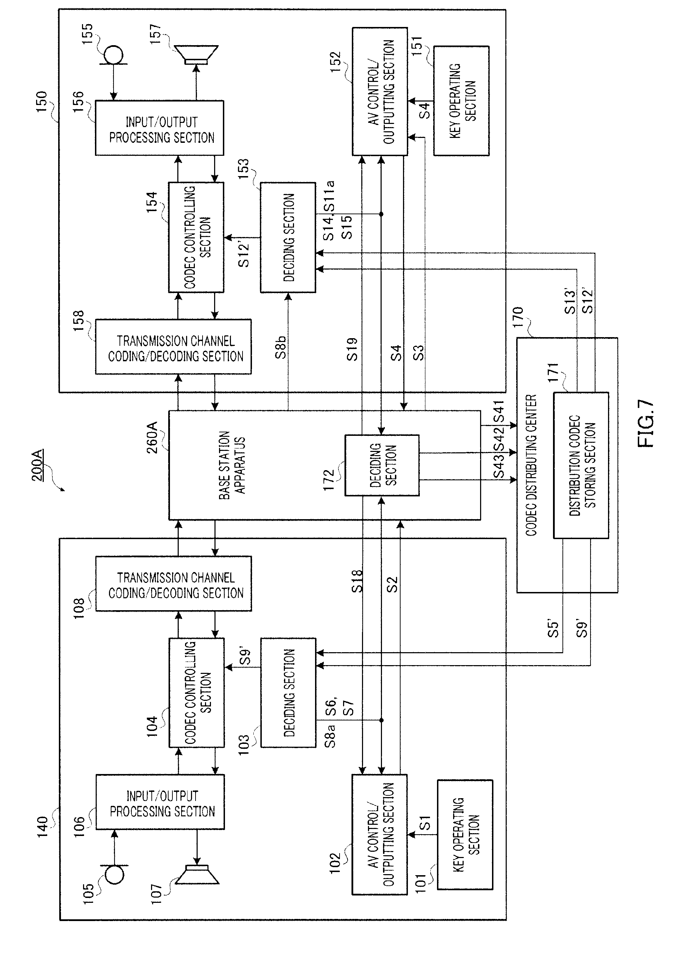

FIG.7 is a block diagram showing a main configuration of wireless communication system 200A that can perform decision processing in wireless terminal apparatus 140 and decision processing in wireless terminal apparatus 150 in parallel in time. Note that wireless communication system 200A has the same basic configuration as wireless communication system 200 shown in FIG.6, and the same components will be assigned the same reference numerals and explanation thereof will be omitted.

Wireless communication system 200A differs from wireless communication system 200 in further having deciding section 172 inside base station apparatus 260A. Therefore, the different configuration and operation from base station apparatus 260 of wireless communication system 200 will be assigned different reference numerals to distinguish between these differences.

The operations from the operation of outputting (S1) an electrical signal from key operating section 101 by the user, to AV controlling/outputting section 102 in wireless terminal apparatus 140 of the calling side, to the operation of reporting (S4) that communication is established, from key operating section 151 to base station apparatus 260A through AV controlling/outputting section 152 in wireless terminal apparatus 150 of the call-receiving side, are the same as in the explanation of above FIG.1.

When receiving a notice that communication is established, base station apparatus 260A commands codec distributing center 170 to output bit allocation information matching one of a plurality of items of speech codec software stored in distribution codec storing section 171, to deciding section 103 and deciding section 153 (S41). Distribution codec storing section 171 that receives the command outputs bit allocation information of the specified software, to deciding section 103 and deciding section 153 (S5' and S13').

Next, deciding section 103 and deciding section 153 each perform decision processing. The details of decision processing are the same as in the explanation of FIG.1, and therefore will not be explained. Then, the decision results (S6, S7, S8a, S14, S15 and S11a) in the deciding sections are inputted to deciding section 172 inside base station apparatus 260A. S14 and S15 in wireless terminal apparatus 150 correspond to S6 and S7, respectively, in wireless terminal apparatus 140. Further, S6 and S14 only need to be information that simply indicates decision results that "storage is not possible."

Deciding section 172 of base station apparatus 260A compares the decision result received as input from deciding section 103 and the decision result received as input from deciding section 153, and, if at least one of decision results indicates that "storage is not possible," deciding section 162 selects another speech codec software and reports the identification number of this software to distribution codec storing section 171 (S42). Distribution codec storing section 171 outputs bit allocation information of the speech codec software matching the identification number, to deciding section 103 and deciding section 153 (S5' and S13'). Subsequently, the same operations described above are repeated until both of decision results indicate that "storage is possible."

In case where the decision result received as input from deciding section 103 and the decision result received as input from deciding section 153 both indicate that "storage is possible" (S8a and S11a), deciding section 172 of base station apparatus 260A reports the identification number of this software to distribution codec storing section 171 (S43). Distribution codec storing section 171 outputs the speech codec software matching the identification number, to both of deciding section 103 and deciding section 153 (S9' and S12'), and deciding section 103 and deciding section 153 output the software to codec controlling section 104 and codec controlling section 154 (S9' and S12'). Further, if both of decision results indicate that "storage is possible," deciding section 172 further reports the decision result that "communication is established," to both of AV controlling/outputting section 102 and AV controlling/outputting section 152 (S18 and S19).

As described above, it is possible to perform decision processing in wireless terminal apparatus 140 of the calling side and perform decision processing in wireless terminal apparatus 150 of the call-receiving side in parallel in time, and its advantage is the same as in the case where decision processings are performed serially in time.

Further, although a case has been explained with the present embodiment as an example where speech codec software is downloaded from a codec distributing center, the present invention is not limited to this and it is equally possible to download speech codec software from the Internet or from external apparatus.

(Embodiment 4)

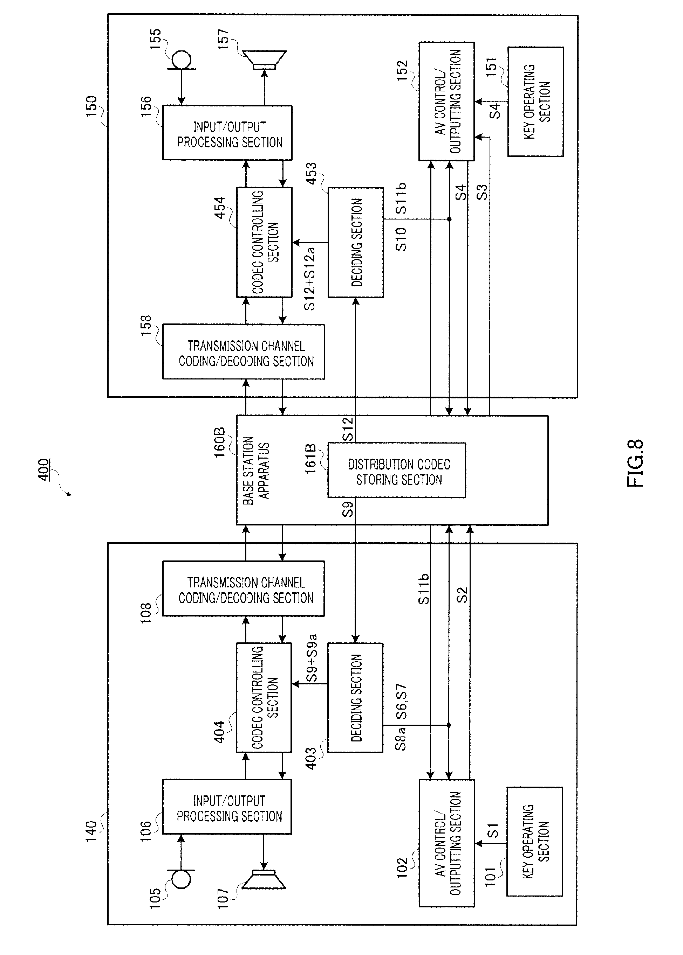

FIG.8 is a block diagram showing a main configuration of wireless communication system 400 according to Embodiment 4 of the present invention. Note that wireless communication system 400 has the same basic configuration as wireless communication system 100 (see FIG.1) described in Embodiment 1. Different reference numerals will be assigned to show the differences between the configurations and operations of deciding section 403, deciding section 453, codec controlling section 404, codec controlling section 454, base station apparatus 160B and distribution codec storing section 161B in wireless communication system 400 and the configurations and operations of deciding section 103, deciding section 153, codec controlling section 104, codec controlling section 154, base station apparatus 160 and distribution codec storing section 161 in wireless communication system 100.

A case has been explained with FIG.4 of above-described Embodiment 1 where distribution codec storing section 161 A stores bit allocation information matching speech codec software, and deciding 103 and deciding section 153 perform decision processings based on bit allocation information received as input from distribution codec storing section 161A. A case will be explained with Embodiment 4 of the present invention where distribution codec storing section 161B does not store bit allocation information of speech codec software, and deciding section 403 and deciding section 453 perform decision processing without receiving bit allocation information as input.

As a method of performing decision processing without receiving bit allocation information as input, each deciding section operates an encoder to analyze the breakdown of bit allocation of encoded data to be outputted, and performs decision processing based on the analyzed breakdown of bit allocation and the total number of bits of the encoded data. An example will be explained with the present embodiment where a method of cross-checking bit sensitivity and estimating the breakdown of bit allocation of encoded data is employed as the method of analyzing the breakdown of bit allocation.

Deciding section 403 and deciding section 453 encode sensitivity measurement data prepared in advance, and invert one arbitrary bit of the outputted encoded data. Then, deciding section 403 finds the statistics of bit error sensitivity by decoding a plurality of items of encoded data which each invert one arbitrary bit, and cross-checks the determined statistics of sensitivity and predetermined reference sensitivity data.

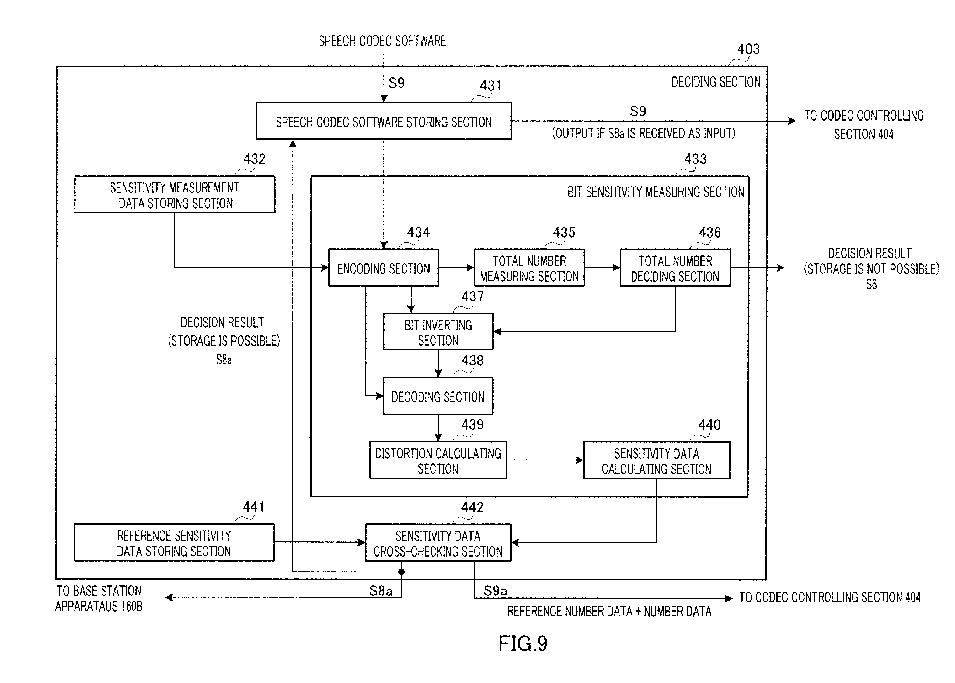

FIG.9 is a block diagram showing components that relate to calculation and cross-checking of bit sensitivity in the internal configuration of deciding section 403. Further, the components that relate to calculation and cross-checking of bit sensitivity in the internal configuration of deciding section 453 are the same as in deciding section 403, and therefore explanation thereof will be omitted.

In FIG.9, deciding section 403 has speech codec software storing section 431, sensitivity measurement data storing section 432, bit sensitivity measuring section 433, reference sensitivity data storing section 441 and sensitivity data cross-checking section 4 42. Among these components, bit sensitivity measuring section 433 has encoding section 434, total number measuring section 435, total number deciding section 436, bit inverting section 437, decoding section 438, distortion calculating section 439 and sensitivity data calculating section 440.

Speech codec software storing section 431 stores speech codec software received as input from distribution codec storing section 161B (S9).

Sensitivity measurement data storing section 432 stores in advance a plurality of data samples for sensitivity measurement.

In bit sensitivity measuring section 433, encoding section 434 encodes the data samples in sensitivity measurement data storing section 432 using the speech codec software stored in speech codec software storing section 431, and outputs the resulting encoded data to total number measuring section 435, bit inverting section 437 and decoding section 438.

Total number measuring section 435 measures the total number of bits of the encoded data received as input from encoding section 434, and outputs the measurement result to total number deciding section 436 as total number information.

Total number deciding section 436 decides whether or not the total number information received as input from total number measuring section 435 is equal to or less than the amount of information that can be transmitted by wireless communication system 400. If the total number information is greater than the amount of information that can be transmitted, total number deciding section 436 decides that the speech codec software cannot be stored and functioned in codec controlling section 404 and outputs the decision result (S6), and deciding section 403 finishes processing. By contrast with this, if the total number information is equal to or less than the amount of information that can be transmitted, total number deciding section 436 outputs the decision result to bit inverting section 437, and processing in deciding section 403 continues.

If bit inverting section 437 receives as input the decision result from total number deciding section 436, bit inverting section 437 inverts one arbitrary bit of the encoded data received as input from encoding section 434, and creates a number of items of encoded data including bit error corresponding to the number indicated by the total number information. For example, the total number information acquired from measurement in total number measuring section 435 is 80, there are 80 patterns of encoded data that include bit error and that can be acquired in bit inverting section 437.

Decoding section 438 decodes all encoded data (81 patterns with the above example) received as input from encoding section 434 and bit inverting section 437, and outputs all resulting decoded data to distortion calculating section 439. Here, encoded data that is received as input from encoding section 434 and that is not subjected to bit inversion will be referred to as "reference encoded data," and decoded data of reference encoded data will be referred to as "reference decoded data."

Distortion calculating section 439 calculates the distortion between reference decoded data received as input from decoding section 438 and each decoded dada other than the reference decoded dada, and outputs the result to sensitivity data calculating section 440. Distortion calculating section 439 adopts the SNR (Signal to Noise Ratio) that is determined according to following equation 1, as the distortion of each decoded data other than the reference decoded data.

[ 1 ]

$$E_m = 10 \times \log_{10} \left\{ \sum_i R_i^2 \middle/ \sum_i (R_i - r_{m,i})^2 \right\} \quad \cdots \quad (\text{Equation 1})$$

In equation 1, $E_m$ represents the distortion between reference decoded data and decoded data in case where the m-th bit of reference encoded data is inverted, $R_i$ represents reference decoded data, and $r_{m,i}$ represents decoded data in case where the m-th bit of the reference encoded data is inverted.

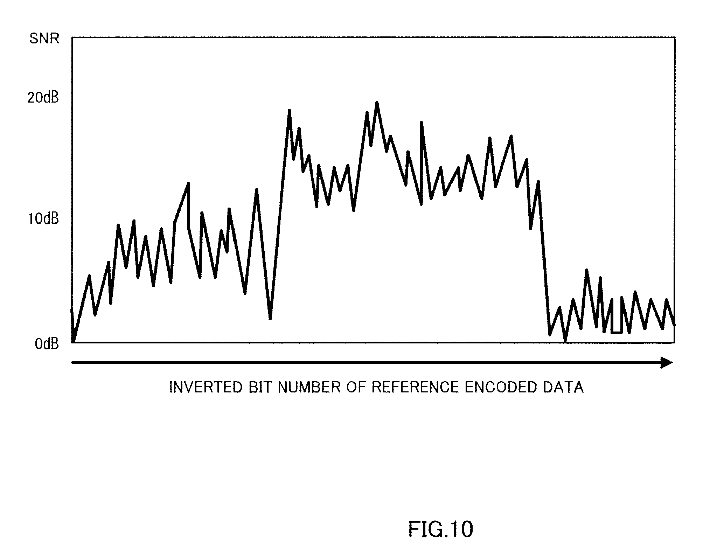

FIG.10 shows an example of a distortion calculation result in distortion calculating section 439.

In FIG.10, the horizontal axis represents an inverted bit number of reference encoded data. The vertical axis represents the SNR that is determined according to equation 1, that is, the distortion between reference decoded data and decoded data in case where each bit of reference encoded data is inverted. As shown in FIG.10, depending on an inverted bit number of the reference encoded data, the distortion between each decoded data and reference decoded data varies. This will be referred to as "bit sensitivity." The bit sensitivity serves as a reference to determine the degree of protection per bit, that is, a reference to design error correction and error detection processing.

Back to FIG.9, in deciding section 403, encoding section 434, total number measuring section 435, total number deciding section 436, bit inverting section 437, decoding section 438, distortion calculating section 439 and sensitivity data calculating section 440 each repeat processing a number of times corresponding to the number of items of sensitivity measurement data stored in sensitivity measurement data storing section 432.

Sensitivity data calculating section 440 calculates the sum of products of distortion on a per bit basis for all data samples stored in sensitivity measurement data storing section 432, using distortion received as input from distortion calculating section 439, and divides the sum of products by the number of all data samples. Sensitivity data calculating section 440 outputs the division result of each bit, to sensitivity data cross-checking section 442 as the average bit sensitivity of each bit. In this way, the average distortion (hereinafter, referred to as "sensitivity data") of codecs stored in speech codec software storing section 431 is determined.

Reference sensitivity data storing section 441 stores reference sensitivity data in advance. Reference sensitivity data stored in reference sensitivity data storing section 441 is sensitivity data determined in sensitivity data calculating section 440 by functioning bit sensitivity measuring section 433 in advance using a codec that is assumed when an algorithm for transmission channel coding/decoding is designed and that can be stored in codec controlling section 404, such as the standard codec of the G.729 scheme.

Sensitivity data cross-checking section 442 retrieves reference sensitivity data from reference sensitivity data storing section 441, compares this reference sensitivity data with sensitivity data received as input from sensitivity data calculating section 440 and decides whether or not a speech codec stored in speech codec software storing section 431 can be stored in codec controlling section 404. First, if the SNR of sensitivity data received as input from sensitivity data calculating section 440 is greater than the SNR of reference sensitivity data, that is, if the bit sensitivity of sensitivity data is lower (i.e. better) than the bit sensitivity of reference sensitivity data, sensitivity data cross-checking section 442 decides that the speech codec stored in speech codec software storing section 431 can be stored in codec controlling section 404. That is, if following equation 2 is satisfied, sensitivity data cross-checking section 442 decides that the speech codec software stored in speech codec software storing section 431 can be stored in codec controlling section 404, and outputs the speech codec software to codec controlling section 404.

$$[2]$$

$$s_i > s_i^r - \gamma_i \quad for\ all\ i \quad \dots \ (\mathrm{Equation}\ 2)$$

In equation 2, $s_i$ represents sensitivity data received as input from sensitivity data calculating section 440, $s_i^\gamma$ represents reference sensitivity data, i represents the inverted bit number of reference encoded data and $\gamma_i$ represents a margin.

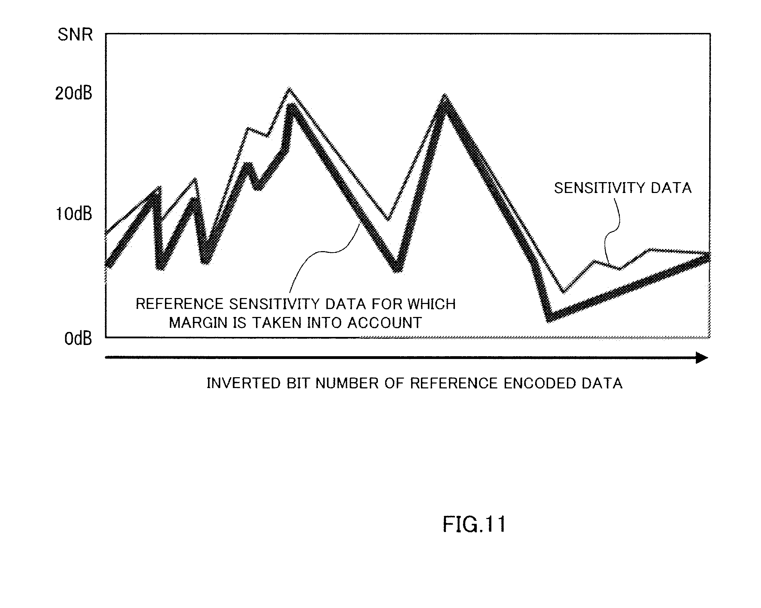

FIG.11 shows an example of the state where reference sensitivity data and sensitivity data for which the margin is taken into account are cross-checked in sensitivity data cross-checking section 442.

There is a possibility that the overall performance of a codec may improve speech quality even if sensitivity data per bit received as input from sensitivity data calculating section 440 is poor more or less, sensitivity data cross-checking section 442 uses the margin to check sensitivity data. In FIG.11, the horizontal axis represents the inverted bit number of reference encoded data, and the vertical axis represents sensitivity data that is represented by the SNR. Further, the thin graph represents sensitivity data received as input from sensitivity data calculating section 440, and the bold graph represents reference sensitivity data for which the margin is taken into account (that is, the graph determined by subtracting the SNR corresponding to the margin from the SNR of reference sensitivity data). Sensitivity data cross-checking section 442 may use the margin, which is a constant, and, as shown in equation 2, the margin that varies between bits of reference encoded data may be used. In the state shown in FIG.11, sensitivity data is greater than reference sensitivity data for which the margin is taken into account, and therefore bit sensitivity is in a good state and sensitivity data cross-checking section 442 can decide that the speech codec stored in speech codec software storing section 431 can be stored in codec controlling section 404.

Cross-checking of sensitivity data using equation 2 is effective for codecs of similar bit allocations. However, information of similar sensitivity data does not always have the same bit number, and there are cases where bit allocation itself is different. In this case, if bit sensitivity is cross-checked using equation 2, mountains and valleys in bit sensitivity in case where bit sensitivity is represented by a graph do not match, and therefore there is a possibility that a wrong checking result is obtained. In order to support this case, preferably, sensitivity data cross-checking section 442 cross-checks sensitivity data and reference sensitivity data that are received as input from sensitivity data calculating section 440 using sorting.

Cross-checking of sensitivity data that is performed in sensitivity data cross-checking section 442 and that uses sorting will be explained below. First, sensitivity data cross-checking section 442 sorts reference sensitivity data retrieved from reference sensitivity data storing section 441 in bit units according to the size. Further, sensitivity data cross-checking section 442 memorizes a bit number of reference sensitivity data (hereinafter "reference number data") prior to sorting. Further, sensitivity data cross-checking section 442 sorts sensitivity data received as input from sensitivity data calculating section 440 in bit units according to the size, and memorizes the bit number of sensitivity data (hereinafter, "number data") prior to sorting. Then, if following equation 3 is satisfied, sensitivity data cross-checking section 442 decides that the speech codec stored in speech codec software storing section 431 can be stored in codec controlling section 404.

$$[ 3 ]$$

$$S_j > S_j^r - \delta_j \quad for\ all\ j \quad \dots \quad (Equation\ 3)$$

In equation 3, $S_j$ represents sorted sensitivity data, $S_j^\gamma$ represents sorted reference sensitivity data, j represents the inverted bit number of reference encoded data and $\delta_j$ represents the margin.

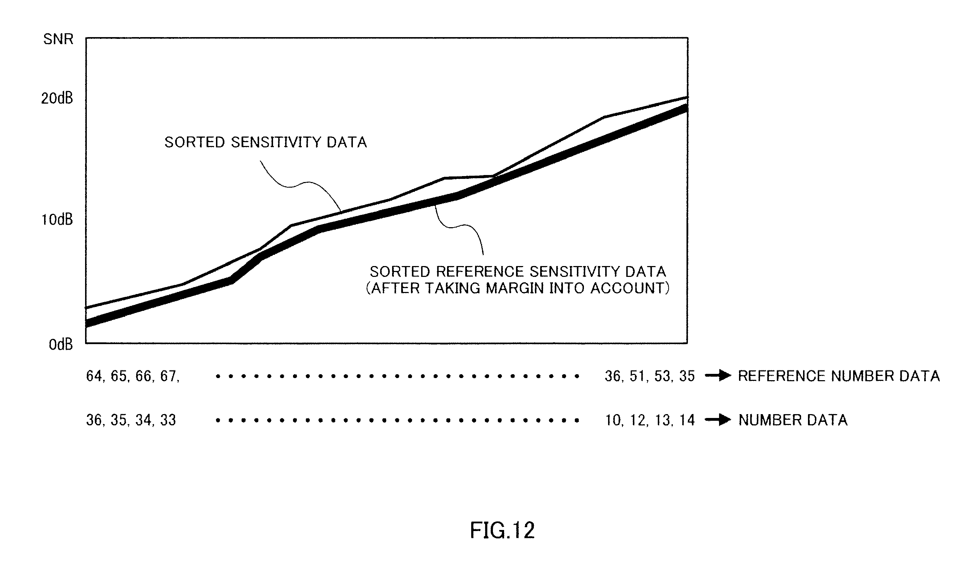

FIG.12 illustrates cross-checking of sensitivity data using sorting in sensitivity data cross-checking section 442.

In FIG.12, the horizontal axis represents reference number data and number data, and the vertical axis represents sensitivity data represented by the SNR. Further, the thin graph represents sorted sensitivity data, and a bold graph represents sorted reference sensitivity data (for which the margin is taken into account). In the state shown in FIG.12, after sorting, sensitivity data is greater than reference sensitivity data for which the margin is taken into account, and therefore bit sensitivity is in a good state and sensitivity data cross-checking section 442 can decide that the speech codec stored in speech codec software storing section 431 can be stored in codec controlling section 404.

If sensitivity data cross-checking section 442 decides that the speech codec stored in speech codec software storing section 431 can be stored in codec controlling section 404, sensitivity data cross-checking section 442 outputs the decision result (S8a) to base station 160B and speech codec software storing section 431, and outputs the speech codec software (S9) stored in speech codec software storing section 431 to codec controlling section 404 together with reference data and number data (S9a).

Codec controlling section 404 and codec controlling section 454 encode digital speech signals received as input from input/output processing section 106 and input/output processing section 156, and interleave bits of the resulting speech encoded data using number data and reference number data received as input from sensitivity data cross-checking section 442. Further, codec controlling section 404 and codec controlling section 454 perform decoding processing after interleaving bits of encoded speech data received as input from transmission channel coding/decoding section 108 and transmission channel coding/decoding section 158 using number data and reference number data received as input from sensitivity data cross-checking section 442.

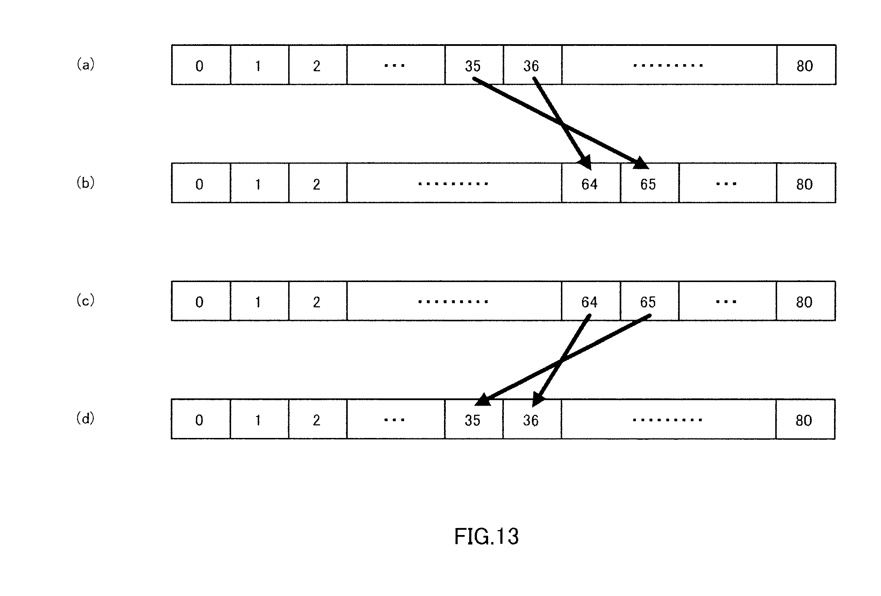

FIG.13 illustrates bit interleaving processing in encoders and decoders that are stored to function in codec controlling section 404 and codec controlling section 454.

FIG.13(a) and FIG.13(b) show examples where codec controlling section 404 and codec controlling section 454 interleave bits of encoded speech data resulting from encoding processing. FIG.13(c) and FIG.13(d) show examples where codec controlling section 404 and codec controlling section 454 interleave bits of encoded speech data received as input from transmission channel coding/decoding section 108 and transmission channel coding/decoding section 158. Further, FIG.13 shows an example of interleaving two bits.

As described above, according to the present embodiment, even if bit allocation information is not added to codec software stored in distribution codec storing section 161B, by calculating sensitivity data of the codec software stored in distribution codec storing section 161B and cross-checking the sensitivity data and reference sensitivity data, it is possible to decide whether or not it is possible to store the codec software in the codec controlling section.

Further, although a case has been explained with the present embodiment as an example where sensitivity data cross-checking section 442 retrieves reference sensitivity data from reference sensitivity data storing section 441, performs sorting and finds the sorted reference sensitivity data and reference number data, the present invention is not limited to this, and reference sensitivity data storing section 441 may store reference sensitivity data and reference number data sorted in advance in addition to reference sensitivity data.

In the above description, although, after decision processing in deciding section 403 of wireless terminal apparatus 140 of the calling side, deciding section 453 of wireless terminal apparatus 150 of the call-receiving side performs decision processing, that is, the configurations and operations of performing decision processing in wireless terminal apparatus 140 and performing decision processing in wireless terminal apparatus 150 serially in time and alternately have been explained, it is equally possible to perform decision processing in wireless terminal apparatus 140 and perform decision processing in wireless terminal apparatus 150 in parallel in time. Hereinafter, an example of a configuration and operation in another mode of the present embodiment will be explained.

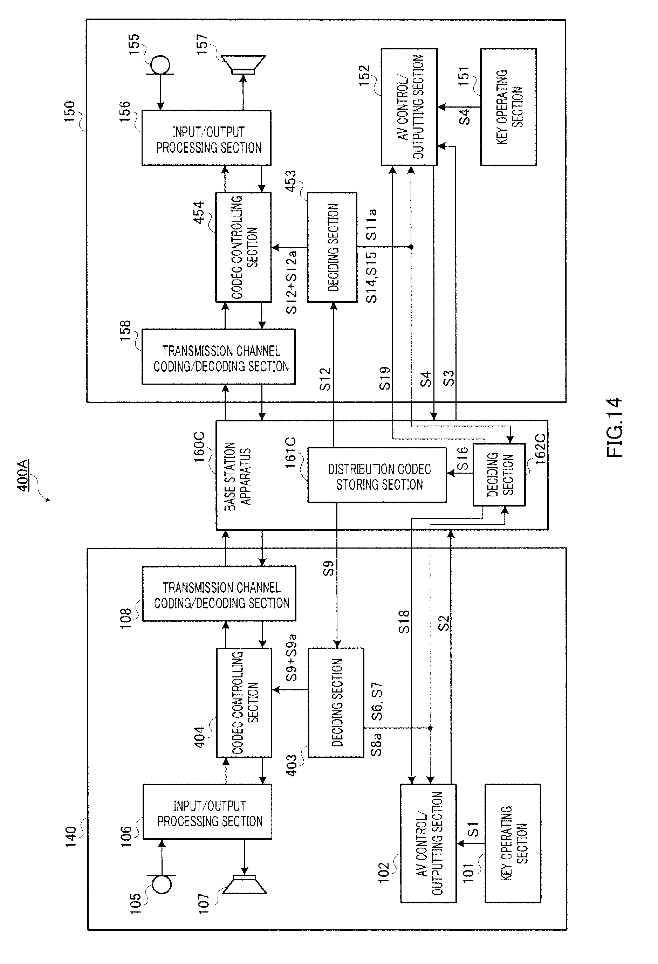

FIG.14 is a block diagram showing a main configuration of wireless communication system 400A that can perform decision processing in wireless terminal apparatus 140 and perform decision processing in wireless terminal apparatus 150 in parallel in time. Note that wireless communication system 400A has the same basic configuration as wireless communication system 400 shown in FIG.8, and the same components will be assigned the same reference numerals and explanation thereof will be omitted.

Wireless communication system 400A differs from wireless communication system 400 in further having deciding section 162C inside base station apparatus 160C. Therefore, different configurations and operations from base station apparatus 160B and distribution codec storing section 161B of wireless communication system 400 will be assigned different reference numerals to distinguish between these differences.

The operations from the operation of outputting (S1) an electrical signal from key operating section 101 by the user, to AV controlling/outputting section 102 in wireless terminal apparatus 140 of the calling side, to the operation of reporting (S4) that communication is established, from key operating section 151 to base station apparatus 160C through AV controlling/outputting section 152 in wireless terminal apparatus 150 of the call-receiving side, are the same as in the explanation of above FIG.1.

When receiving a notice that communication is established, base station apparatus 160C outputs one of a plurality of items of speech codec software stored in distribution codec storing section 161C, to deciding section 403 and deciding section 453 (S9 and S12).

Next, deciding section 403 and deciding section 453 each perform decision processing. The details of decision processing are the same as in the explanation of above FIG.8 to FIG.13, and therefore will not be explained. Then, the decision results (S6, S7, S8a, S14, S15 and S11a) in the deciding sections are inputted to deciding section 162C inside base station apparatus 160C. S14 and S15 in wireless terminal apparatus 150 correspond to S6 and S7, respectively, in wireless terminal apparatus 140. Further, S6 and S14 only need to be information that simply indicates decision results that "storage is not possible."

Deciding section 162C of base station apparatus 160C compares the decision result received as input from deciding section 403 and the decision result received as input from deciding section 453, and, if at least one of decision results indicates that "storage is not possible," deciding section 162C selects another speech codec software and reports the identification number of this software to distribution codec storing section 161C (S16). Distribution codec storing section 161C outputs the speech codec software matching the identification number, to deciding section 403 and deciding section 453 (S9 and S12). Subsequently, the same operations described above are repeated until both of decision results indicate that "storage is possible."

If the decision result received as input from deciding section 403 and the decision result received as input from deciding section 453 both indicate that "storage is possible" (S8a and S11a), deciding section 162C of base station apparatus 160C reports the decision results that "communication is established," to AV controlling/outputting section 102 and AV controlling/outputting section 152 (S18 and S19).

As described above, it is possible to perform decision processing in wireless terminal apparatus 140 of the calling side and perform decision processing in wireless terminal apparatus 150 of the call-receiving side in parallel in time, and its advantage is the same as in the case where decision processings are performed serially in time.

(Embodiment 5)

With the present embodiment, one variation of speech codec software stored in distribution codec storing section 161 will be explained in detail. Note that speech codec software according to the present embodiment is a variation of the speech codec of the G.729 scheme of the ITU-T standard, and its bit allocation is the same as the bit allocation of the speech codec of the G.729 scheme of the ITU-T standard.

Hereinafter, encoding target parameters of the speech codec software according to the present embodiment will be explained in comparison with the speech codec of the G.729 scheme of the ITU-T standard.

(1) LSP quantizer

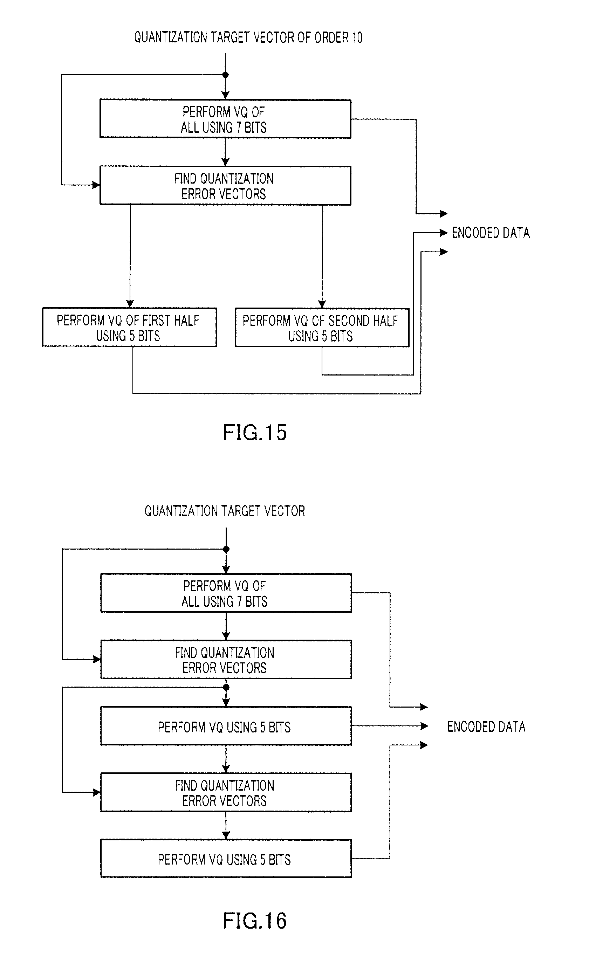

FIG.15 explains an LSP quantizing method in the speech codec of the G.729 scheme. As shown in FIG. 15, the speech codec of the G.729 scheme provides two stages of LSP quantization (one bit indicates a stage number), and performs LSP quantization of order 10 in total. Vector quantization is performed using the seven bits in the first stage, and split vector quantization of error vectors of the first stage are performed using five bits $\times$ 2 in the second stage.

FIG.16 illustrates the LSP quantizing method in speech codec software according to the present embodiment.

As shown in FIG.16, the speech codec software according to the present embodiment provides three stages, and performs quantization of a quantization target vectors of order 10. All of quantization target vectors are subjected to vector quantization using 7 bits in the first stage, quantization error vectors of the first stage are subjected to vector quantization using 5 bits in the second stage, and the first half and the second half of quantization error vectors of the second stage are subjected to vector quantization using 5 bits each in the third stage.

Comparison between the LSP quantizing method of the speech codec of the G.729 scheme shown in FIG.15 and the LSP quantizing method of speech codec software according to the present embodiment shown in FIG.16 shows that the degrees of prediction coefficients are the same and the quantization processings in the first stage are the same. Note that, while the speech codec of the G.729 scheme performs split vector quantization using 5 bits $\times$ 2 in the second stage, the speech codec according to the present embodiment performs vector quantization of quantization error vectors of the previous step using 5 bits each in the second stage and third stage. Compared to the LSP quantizing method of the speech codec of the G.729 scheme, although the LSP quantizing method of the speech codec software according to the present embodiment increases the amount of computation to some extent, this method improves the accuracy of LSP quantization. This is because split vector quantization divides a vector, and therefore mutual correlation between two divided vectors resulting from the division cannot be utilized. By contrast with this, LSP quantization of a multi-stage configuration can utilize overall statistical bias of vectors sufficiently, and consequently improve the accuracy of quantization. The configuration of LSP vector quantization of three stages according to the present embodiment can provide better performance using the same number of bits as in the G.729 scheme. Further, the three-stage configuration having a greater number of stages than two stages of the LSP quantizing method of the G.729 scheme maintains the same bit sensitivity as the G.729 scheme, and consequently can use transmission channel coding that is supported by the speech codec of the G.729 scheme, on a as-is basis.

(2) Adaptive codebook

With respect to the adaptive codebook, the speech codec of the G.729 scheme quantizes the first subframe using 9 bits, and the delta lag of the second subframe (i.e. the difference from the lag of the first subframe) using 5 bits.

However, there is a problem with the G.729 scheme that using 9 bits to quantize the lag of the first subframe is beyond the specification thereof, and the number of entries (i.e. 32 entries) supporting 5 bits of the second subframe is too small. Further, transmission error produced in the first subframes propagates to the second subframe. Therefore, the speech codec software according to the present embodiment performs encoding by a full search using 7 bits + 7 bits without using the delta lag. Compared to the G.729 scheme, although the number of entries of the first subframe decreases, the speech codec software according to the present embodiment becomes robust against transmission error as a whole, and can improve sound quality of consonant sections and the like which make fluctuation severe. By connecting 2 lower bits of 7 bits of the second subframe to the tail of the first subframe to make 9 bits, it is possible to perform transmission channel coding that is supported by the speech codec of the G.729 scheme, on a as-is basis.

(3) Fixed codebook

With the speech codec of the G.729 scheme, the fixed codebook uses an algebraic excitation formed with four pulses, represents the polarity of each pulse using 4 bits and represents the position of each pulse using 13 bits (3+3+3+4).

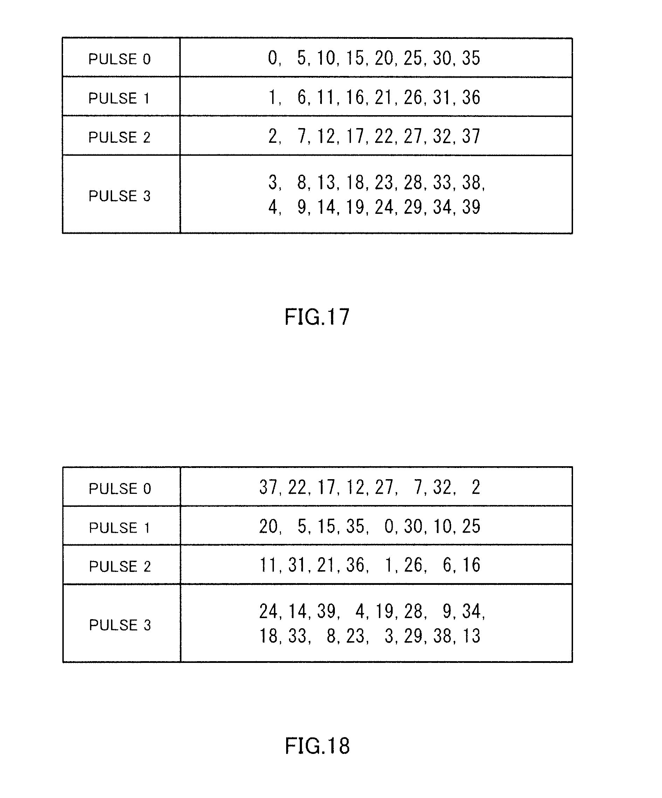

FIG.17 shows a table (hereinafter, a pulse position table) that represents the positions of four pulses forming an algebraic excitation used as the fixed codebook of the speech codec of the G.729 scheme.

For the fixed codebook, the speech codec according to the present embodiment uses an algebraic excitation of another configuration with higher confidentiality than the algebraic excitation formed with four pulses. To be more specific, the pulse position table according to the present embodiment is acquired by reordering the elements of the pulse position table according to the G.729 scheme.

FIG.18 shows an example of the pulse position table according to the present embodiment acquired by reordering the elements of the pulse position table according to the G.729 scheme.

The pulse position table shown in FIG.17 and the pulse position table shown in FIG.18 are different tables that have the same encoding performance. Further, it is possible to replace channels of pulses 0 to 2 without changing encoding performance at all. That is, in comparison of encoding using the pulse position table shown in FIG.18 and the pulse position table shown in FIG.17, encoding performance is completely the same and the resulting encoding information (i.e. position numbers of pulses) are completely different. Confidentiality improves significantly by making the above reordering method unique to speech communication. For example, by allowing the pulse position table of the speech codecs stored in unique codec storing section 201 of FIG.5 to be freely edited by means of the key operation of key operating section 101, it is possible to use different codecs every telephone call. To be more specific, only seeds of random numbers are inputted from key operating section 101, and the pulse position table is reordered according to the random numbers that are produced. It is equally possible to input the random number seeds and reorder the pulse position table in this way when speech codec software is downloaded from distribution codec storing section 161 or immediately before speech communication is started. Deciding section 103 reorders the pulse position table for the speech codec software distributed from base station apparatus 160 or codec distributing center 170 of FIG.6 based on the seeds from key operating section 101. Further, to make the encoder and decoder support each other, it is necessary to transfer the speech codec software for which the pulse position table is reordered, to wireless terminal apparatus 150 of the call-receiving side (or wireless terminal apparatus 250).

Furthermore, compared to the case where encoding is performed using the pulse position table shown in FIG. 17, by performing encoding using the pulse position table shown in FIG.18, it is possible to apply the same transmission channel coding method without changing bit sensitivity at all.

(4) Gain encoding

The speech codec of the G.729 scheme performs vector quantization of gain divided in two stages using 7 bits (3 bits + 4 bits). By contrast with this, it is known that 7-bit vector quantization of a one-stage configuration using 128 kinds of code vectors provides more flexibility of code vectors, and provides better encoding performance than 7-bit vector quantization of a two-stage configuration. Therefore, the speech codec software according to the present embodiment performs 7-bit vector quantization of the one-stage configuration with respect to gain.

Although it is possible to improve performance of encoding using 7 bits, it is desirable to adjust the bit sensitivity of each of 7 bits to the characteristics of the G.729 scheme (that bit sensitivity of 3 bits of the first half is higher and bit sensitivity of 4 four bits of the second half is lower). This is because, if bit sensitivities are not adjusted, code vectors of 128 kinds are assigned numbers at random and therefore bit sensitivities of 7 bits become the same, and, when error correction/detection algorithm (for protecting 3 bits of the first half and placing less protection for 4 bits of the second half) matching the characteristics of the G.729 scheme is used on a as-is basis, there is a possibility that malfunction occurs in performance.

The bit sensitivities are adjusted to the characteristics of this G.729 scheme by, for example, dividing code vectors of 128 kinds of the speech codec software according to the present embodiment, into eight groups (where one group includes 16 code vectors) within the distance of this vector space, and representing each code vector by the group number (0 to 7) and intragroup number (0 to 15). That is, new eight groups and new centroids of these groups are determined using a clustering algorithm such as an LBG algorithm for 128 centroids, the distances between the new centroids and 128 centroids are cross-checked and 16 members that minimize the distances from the new centroids are determined. Then, it is only necessary to represent a new centroid number using 3 bits, represent a new intragroup number using 4 bits and assign new numbers to 128 centroids. For example, if the new group number is "5" and the new intragroup number is "7," the number 87 is determined based on "$5 \times 16 + 7 = 87$."

This method makes it possible to improve encoding performance while adjusting bit sensitivities to the characteristics of the G.729 scheme, and use transmission channel coding (including the error correction/detection algorithm) that is supported by the speech codec of the G.729 scheme, on a as-is basis.

In case where speech codec software according to the present embodiment is used, if the criterion of decision for decision processings in deciding section 103 and deciding section 153 indicates that the number of bits of each parameter outputted from the encoder does not exceed the number of bits outputted from the standard codec of a communication system, this means that the number of outputted bits of each parameter in above (1) to (4) does not exceed the number of bits outputted from the standard codec of the communication system.

As described above, with the present embodiment, different speech codecs are configured with the same bit allocation and bit sensitivity as in the speech codec of the G.729 scheme, so that it is possible to improve the encoding performance and confidentiality of speech codec software, and use transmission channel coding that is supported by the speech codec of the G.729 scheme, on a as-is basis.

Further, although the speech codec software according to the present embodiment has been explained as one variation of speech codec software stored in distribution codec storing section 161, the present invention is not limited to this and it is equally possible to use the codec software according to the present embodiment like the standard codec. In this case, if the encoders and decoders of communication terminals support each other, sound quality and confidentiality are improved compared to G.729, so that it is possible to perform speech communication of higher performance that can be updated.

(Embodiment 6)

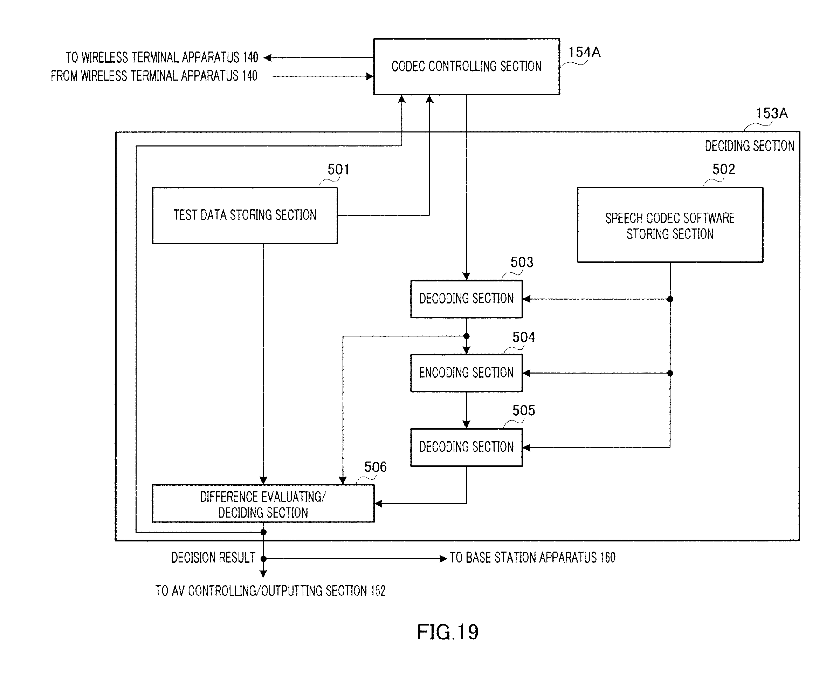

A case will be explained with the present embodiment where functions are added to the deciding sections explained in Embodiment 1. Note that the wireless terminal apparatus according to the present embodiment employs a configuration adding the configuration shown in FIG.19, to deciding sections 103 and 153 and codec controlling sections 104 and 154 in the configuration shown in FIG.1. Further, both of the wireless terminal apparatuses of the calling side and call-receiving side have the same functions, and therefore, on behalf of these functions, the functions of the wireless terminal apparatus of the call-receiving side will be explained. Assume that codec controlling section 154A in FIG.19 is included in codec controlling section 154 in FIG.1, and deciding section 153A in FIG.19 is included in deciding section 153 in FIG.1.

The present embodiment further provides the function of deciding whether or not communication is possible using a codec stored in codec controlling section 104 and 154 in case where two deciding sections 103 and 153 cannot download speech codec software to wireless terminal apparatuses. FIG.19 is used to explain this function. FIG.19 is a block diagram mainly showing the configuration inside deciding section 153A according to the present embodiment. As shown in FIG.19, deciding section 153A has test data storing section 501, speech codec software storing section 502, decoding section 503, encoding section 504, decoding section 505, and difference evaluating/deciding section 506. Note that, in FIG.19, a transmission channel coding/decoding section and a base station apparatus that are provided in a transmission channel betweeen codec controlling section 154A and wireless terminal apparatus 140 are not shown for ease of illustration.

Deciding section 153A performs the above decision, and outputs the decision result to codec controlling section 154A, AV controlling/outputting section 152 and base station apparatus 160. The details are as follows.

First, deciding section 153A decides that communication is possible using the speech codec software stored in codec controlling section 154A, and outputs the decision result to codec controlling section 154A, AV controlling/ outputting section 152 and base station apparatus 160. In this case, when the decision result is received, this means that codec controlling section 154A receives a command to perform encoding and decoding using the speech codec software that has already been stored. In response to this decision result, AV controlling/outputting section 152 carries out AV output such as speech output or screen display to tell the user that communication is possible. Further, the decision result is also transmitted to AV controlling/outputting section 102 (S11b) and deciding section 103 of wireless terminal apparatus 140 of the communicating party through base station apparatus 160. When receiving this decision result, deciding section 103 of wireless terminal apparatus 140 transmits this decision result to codec controlling section 104. If codec controlling section 104 receives this decision result, this means that communication is established between wireless terminal apparatuses 140 and 150, thereby providing a state where a telephone call is possible.

By contrast with this, if deciding section 153A decides that communication is not possible using the speech codec software stored in codec controlling section 154A and outputs this decision result, in response to this decision result, AV controlling/outputting section 152 carries out AV output to tell the user that communication is not possible. Further, in this case, the decision result is not outputted to codec controlling section 154A, or, even if this decision result is transmitted to codec controlling section 154A, codec controlling section 154A only receives this decision result and does not perform any particular operation. Furthermore, the decision result is also transmitted to AV controlling/outputting section 102 and deciding section 103 (S10) of wireless terminal apparatus 140 of the communicating party through base station apparatus 160. When deciding section 103 of wireless terminal apparatus 140 receives this decision result, both of wireless terminal apparatuses 140 and 150 do not establish communication and finish the task.

With the present embodiment, the processing performed by deciding section 153A is divided into two. The first one is the processing of transmitting a code to wireless terminal apparatus 140 of the communicating party to decide whether or not it is possible to use the speech codec stored in codec controlling seciton 104 of wireless termianl apparatus 140 of the communicating party, on a as-is basis. The second one is the processing of deciding whether or not it is possible to use the speech codec stored in codec controlling section 154A of wireless terminal apparatus 150 on a as-is basis, utilizing the code tranmsmitted from wireless termninal apparatus 140 of the communicating party.

Now, the first processing will be explained. Assume that test speech data is stored in test data storing section 501 in deciding section 153A.

First, test data storing section 501 outputs test speech data to codec controlling section 154A. Next, codec controlling section 154A encodes the test speech data using the speech codec stored inside, and transmits the resulting code to wireless terminal apparatus 140.

Wireless terminal apparatus 140 makes decision based on this code. Note that test speech data is used to decide whether or not speech communication can be started promptly immediately after communication is started, and test data storing section 501 stores data that is easily identified (i.e. speech data that can readily be encoded such as vowel sequences and sine waves), for a short period of time.

Next, the second processing will be explained. Assume that the same software as the speech codec stored in codec controlling section 154A is stored in speech codec software storing section 502.

First, codec controlling section 154A receives a code that has been subjected to the same processing as the above processing and that has been transmitted, and outputs the code to decoding section 503 of deciding section 153A.

Next, decoding section 503 finds the first synthesized sound by using the speech codec stored in speech codec software storing section 502 and decoding encoded speech data (i.e. a code) outputted from codec controlling section 154. Further, encoding section 504 finds synthesized sound encoded data by using the speech codec stored in speech codec software storing section 502 and encoding the first synthesized sound outputted from decoding section 503.

Furthermore, decoding section 505 finds the second synthesized sound by using the speech codec stored in speech codec software storing section 502 and decoding the synthesized sound encoded data outputted from encoding seciton 504. Then, difference evaluating/deciding section 506 evaluates the difference between the first synthesized sound and the second synthesized sound, decides whether or not speech communication can be started using the speech codec that has already been stored in codec controlling section 154A, on a as-is basis, and outputs the decision result.

Next, the function of difference evaluating/deciding section 506 will be explained in detail. Difference evaluating/deciding section 506 decides whether or not encoded speech data that is encoded in the encoder of wireless terminal apparatus 140 of the communicating party can be decoded by the decoder of wireless terminal apparatus 150, based on the following tendency using only the transmitted encoded speech data.

No matter what speech codec is used in wireless terminal apparatus 140 of the communicating party to perform encoding, as long as the decoder provided in wireless terminal apparatus 150 supports that speech codec, the first sysnthesized sound becomes similar to test data. Then, if test data has the characteristics of speech data that can readily be encoded, it naturally follows that the resulting first synthesized sound may readily be encoded. Accordingly, by encoding and decoding the first synthesized sound using the speech codec provided in wireless terminal apparatus 150, the resulting second synthesized sound becomes similar to the first synthesized sound.

By contrast with this, if the decoder provided in wireless terminal apparatus 150 does not support the codec of wireless terminal apparatus 140 of the communicating party, the first synthesized sound becomes completely different from test data and therefore there is little possibility that the first synthesized sound becomes data that can readily be encoded. Accordingly, the second synthesized sound acquired by encoding and decoding the first synthesized sound using the codec provided in wireless terminal apparatus 150, becomes completely different from the first synthesized sound.

In view of this tendency, by evaluating the difference between the first synthesized sound and the second synthesized sound, difference evaluating/deciding section 506 can decide whether or not speech communication can be started using the speech codec that has already been stored in codec controlling section 154A, on a as-is basis.

Difference evaluating/deciding section 506 makes decision shown in following equation 4 based on the above tendency. Here, there is a possibility that wireless terminal apparatus 140 of the communicating party uses the same test data, and therefore, difference evaluating/deciding section 506 compares test speech data stored in test data storing section 501 and the first synthesized sound. Further, if wireless terminal apparatus 140 of the communicating party uses the same test data as in wireless terminal apparatus 150, difference evaluating/deciding section 506 can perform more accurate decision.

[4]

$$if \quad CovTA > Th_{ta} \cdot \sqrt{PowT \cdot PowA} \quad then \quad flg = 1 \ (Usable)$$

$$else \ \{$$

$$if \quad CovAB > Th_{ab} \cdot \sqrt{PowA \cdot PowB} \quad then \quad flg = 1 \ (Usable)$$

$$else \quad flg = 0 \ (Unusable)$$

$$\}$$

$$\dots (Equation \ 4)$$

$Th_{ta}$: First reference value (Constant)
$Th_{ab}$: Second reference value (Constant)
$flg$: decision result (1: Usable and 0: Unusable)

$$PowT = \sum_i t_i \cdot t_i$$

$$PowA = \sum_i a_i \cdot a_i$$

$$PowB = \sum_i b_i \cdot b_i$$

$$CovTA = \sum_i t_i \cdot a_i$$

$$CovTB = \sum_i t_i \cdot b_i$$

$t_i$: Test Data
$a_i$: First synthesized sound
$b_i$: Second synthesized sound
$PowT$: Power of test data
$PowA$: Power of first synthesized sound
$PowB$: Power of second synthesized sound
$CovTA$: Correlation value between test data and first synthesized sound
$CovTB$: Correlation value between first synthesized sound and second synthesized sound

As shown in above equation 4, difference evaluating/deciding section 506 performs decision by evaluating the value acquired by normalizing the correlation value using each power value. If the correlation value between test data and the first synthesized sound is greater than a predetermined first reference value, difference evaluating/deciding section 506 decides that the speech codec that has already been stored can be used.

By contrast with this, if the correlation value is equal to or less than the first reference value, this is the case where test data is different or the case where the speech codec cannot be used, and then difference evaluating/deciding section 506 evaluates the correlation between the first synthesized sound and the second synthesized sound.

Then, if the correlation value between the first synthesized sound and the second synthesized sound is greater than the second reference value, difference evaluating/deciding section 506 decides that the speech codec that has already been stored may be used, and, if the correlation value is equal to or less than the second reference value, difference evaluating/deciding section 506 decides that the speech codec that has already been stored cannot be used.

Further, each decision result is indicated by the flag "0" (which means "unusably") or by the flag "1" (which means "usable"). Furthermore, although it depends on performance of the codec, by setting the constant of about 0.9 to 0.95 for the first reference value and setting the constatnt of about 0.87 to 0.92 for the second reference value, it is possible to provide predetermined performance. Still further, it is also effective to prepare a plurailty of reference values and appropriately select the reference value according to the user's demand. In this case, decision may be made as in following equation 5.

[ 5 ]

$$if \quad CovTA > Th_{ta} \cdot \sqrt{PowT \cdot PowA} \quad then \quad flg = 1$$

(Usable on the first criterion)

$$else \quad if \quad CovTA > Th2_{ta} \cdot \sqrt{PowT \cdot PowA} \quad then \quad flg = 2$$

(Usable on the second criterion)

$$else \{$$

$$if \quad CovAB > Th_{ab} \cdot \sqrt{PowA \cdot PowB} \quad then \quad flg = 1$$

(Usable on the first criterion)

$$else \quad if \quad CovAB > Th2_{ab} \cdot \sqrt{PowA \cdot PowB} \quad then \quad flg = 2$$

(Usable on the second criterion)

$$else \quad flg = 0 \quad (Unusable)$$

$$\}$$

... (Equation 5)

$Th_{ta}$: First reference value of first criterion (Constant)
$Th_{ab}$: Second reference value of first criterion (Constant)
$Th2_{ta}$: First reference value of second criterion (Constant)
$Th2_{ab}$: Second reference value of second criterion (Constant)

As indicated in above equation (5), in case of "satisfyingly usable (i.e. first criterion)," decision is made based on "telephone call is possible somehow (i.e. second criterion)." The reference value of the second criterion is set slightly lower than the reference value of the first criterion. Further, the flag in case where decision of "usable" is made based on the second criterion, is represented by "2" (that means "usable" based on the second criterion). By this means, it is possible to set which criterion is used to start a telephone call, according to the design of a wireless terminal apparatus and user's demand.

As described above, by adding the configuration shown in FIG.19 to the configuration of the wireless terminal apparatus shown in FIG.1, it is possible to decide whether or not communication is possible using speech codec software stored in the codec controlling section in case where the speech codec software cannot be downloaded. Then, the decision result is outputted to the codec controlling section and AV controlling/outputting section of wireless terminal apparatus 140 and the wireless terminal apparatus of the communicating party through base station apparatus 160. If the decision result indicates "usable" (flag: 1 or 2), communication is started using the speech codec software stored in the codec controlling section, and, if the decision result indicates "unusable" (flag: 0), communication is not established and the task is finished.

Although a case has been explained with the present embodiment where whether or not a speech codec that has already been stored can be used on a as-is basis is decided, the present invention is not limited to this, and, if software required by deciding section 153 is stored, it is possible to decide whether or not speech codec software that is arbitrarily downloaded can be used.

Although the present embodiment has been explained assuming that codes are exchanged mutually between wireless terminal apparatuses, codes may be exchanged unilaterally. In such a case, although communication quality is only guaranteed only in one of uplink and downlink, this is effective in case where communication quality only needs to be guaranteed in one of uplink and downlink communication.

Further, with the present embodiment, in case where a number of codes corresponding to a plurality of frames are transmitted, it is equally possible to evaluate correlation based on a plurality of connected synthesized sounds or evaluate the sum of correlation values after finding the correlation value on a per frame basis. By taking the latter step, it is possible to provide an advantage of saving the RAM (Random Access Memory) capacity.

Embodiments of the present invention have been explained.

Although a case has been explained with each embodiment as an example where the same speech codec software is used between communication terminal apparatuses, different speech codecs may be used in uplink and downlink communication of one communication terminal apparatus. For example, a method is possible for using completely different encoders between two communication terminal apparatuses and starting communication by exchanging decoders only when communication is established. Uplink and downlink are completely independent and therefore there is no problem if encoding and decoding are performed using different codecs, and it is possible to provide an advantage of improving confidentiality. Further, the calling party may select and use an optimal codec for the communication situation including environmental noise, radio sensitivity (whether or not bit error is great) and an allowable bit rate. Any one of a communication terminal apparatus, base station apparatus, and codec distributing center can select codecs in this way.

Although a case has been explained with each embodiment as an example where a speech codec is transferred and stored when communication is started, the present invention is not limited to this and a speech codec may be transferred and stored in the middle of communication. In such a case, if the calling side changes the encoder, the calling side only needs to transmit the decoder that supports the encoder, together with encoding information. Any one of a communication terminal apparatus, base station apparatus and codec distributing center can transfer codecs in this way.

Although a case has been explained with each embodiment as an example where the bit rate of each encoding element is made the same completely, it is clear that the bit rate of each encoding element only needs to be equal to or less than the number of bits of each encoding element. This is because, if the number of bits of each encoding element is equal to or less than the number of bits of the standard codec of the existing system, it is possible to use existing transmission channel coding on a as-is basis. If there are extra encoding information bits, it is naturally possible to provide devices for improving sound quality and error robustness by, for example, adding a number of correction bits corresponding to the number of extra encoding information bits and using multi-mode.

Although a case has been explained with each embodiment as an example where an algebraic codebook is used as a fixed codebook, the present invention is not limited to this and a multi-pulse codebook or a fixed codebook in which a fixed waveform is written in ROM (Read Only Memory) may be used. Although the position of a pulse is represented using each channel with the above each embodiment, if each channel number corresponds to a vector of a fixed waveform, it is possible to provide the same advantage as in the present invention.

Although each embodiment has been explained taking a CELP codec of the G.729 scheme as an example, the present invention is not limited to this, and, for example, AMR (Adaptive Multi-Rate), AMR-WB (WideBand) (G.722.2), EVRC (Enhanced Variable Rate Codec), SMV (Selectable Mode Vocoder), and VMR-WB (Variable-Rate Multi-Mode Wideband) used in the third generation mobile telephones, or G.726 (i.e. Adaptive Differential Pulse Code Modulation ("ADPCM") used in PHS (Personal Handyphone System) may be used as the standard codec.

Although a case has been explained with each embodiment as an example where the standard codec of an existing wireless communication system is replaced with a different speech codec, the present invention is not limited to this and a standard speech codec may not be provided in the existing wireless communication system. In this case, transmission channel coding/decoding only needs to be transmitted as software together with speech codec software by making the specification of a speech codec completely free. It is equally possible to transmit only a speech codec by determining the ratio of information of predetermined bit sensitivity in encoding information of transmission channel coding/decoding and a speech codec. For example, bit sensitivity is divided into three levels, and the numbers of bits of information having three levels of bit sensitivity in encoding information of 80 bits in total, are determined as 5 bits, 15 bits and 60 bits, respectively.

Although a case has been explained with each embodiment where speech codec software is downloaded and used, the present invention is applicable to an image codec. In recent years, there are mobile telephones that can receive one-segment broadcasting, and it is readily possible to anticipate that, in future, telephone call is made through mobile telephones looking at the communicating party. At this time, the image codec brings the same problem as the speech codec, and the present invention will be effective to solve this problem. If a microphone is replaced with a camera and a speaker is replaced with a display, the present invention can be applied to image codecs as is. Particularly, only the specification of the decoder is defined with the image codec, and each vector develops a unique encoder and competes performance of an encoder with other venders. Appropriation of the present invention to an image codec makes it possible to supply encoders of better performance even after the system is launched and, consequently, its advantage is significant.

Although each embodiment has been explained taking a wireless communication system mediated by a base station as an example, the present invention is applicable to IP telephones and Internet communication. As long as the communication system has a relay function, the present invention is applicable if a base station is not present.

The communication terminal apparatus, communication system and communication method according to the present invention are not limited to the above embodiments and can be realized by making various modifications. For example, each embodiment can be realized by combining them appropriately.

Although, with above each embodiment, a telephone number is used to specify the communication terminal apparatus of the communicating party, it is equally possible to use a unique number that can specify the communication party.

The adaptive codebook may also be referred to as an "adaptive excitation codebook." Further, the fixed codebook may also be referred to as "fixed excitation codebook," or also be referred to as a "noise codebook," "stochastic codebook" or "random codebook."

LSP may also be referred to as "LSF (Line Spectral Frequency)" and LSP may be read as "LSF."

Each function block employed in the description of each of the aforementioned embodiments may typically be implemented as an LSI constituted by an integrated circuit. These may be individual chips or partially or totally contained on a single chip.

"LSI" is adopted here but this may also be referred to as "IC," "system LSI," "super LSI," or "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosures of Japanese Patent Application No.2007-246269, filed on September 21, 2007, and Japanese Patent Application No.2008-115665, filed on April 25, 2008, including the specifications, drawings and abstracts, are incorporated herein by reference in their entirety.

Industrial Applicability

The communication terminal apparatus, communication system and communication method according to the present invention are applicable for use in, for example, a mobile communication system.

**Claims**

1. A communication terminal apparatus comprising:

    a deciding section that decides whether or not speech codec software stored in an external apparatus is suitable for downloading; and
    a codec controlling section that, when the deciding section decides that the speech codec software is suitable for downloading, encodes and decodes speech using the speech codec software downloaded from the external apparatus.

2. The communication terminal apparatus according to claim 1, wherein, based on bit allocation of the speech codec software received as input from the external apparatus, the deciding section decides that the speech codec software is suitable for downloading when a number of bits of an encoded parameter of the speech codec software is equal to or less than a threshold, and decides that the speech codec software is not suitable for downloading when a number of bits of at least one of encoded parameters of the speech codec software is greater than the threshold.

3. The communication terminal apparatus according to claim 1, wherein the deciding section comprises:

    an encoding section that encodes predetermined speech using the speech codec software and acquires encoded data; and
    a first deciding section that decides that the speech codec software is not suitable for downloading when a total number of bits of the encoded data is greater than a predetermined value.

4. The communication terminal apparatus according to claim 3, wherein the deciding section comprises:

    an inverting section that, when the first deciding section decides that a total number of bits of the encoded data is equal to or less than a predetermined value, inverts a polarity of each bit of the encoded data and acquires a number of items of error encoded data corresponding to a total number of bits;

**EP 2 192 578 A1**

a decoding section that decodes the encoded data and the number of items of error encoded data corresponding to the total number of bits using the speech codec software, and acquires decoded data and a number of items of error decoded data corresponding to the total number of bits;

a calculating section that calculates distortion between the decoded data and a number of items of decoded data corresponding to the total number of bits, as bit sensitivity of each bit of the encoded data; and

a second deciding section that decides that the speech codec software is suitable for downloading when the bit sensitivity of each bit is equal to or less than a threshold, and decides that the speech codec software is not suitable for downloading when at least one bit sensitivity of bits is greater than the threshold.

5. The communication terminal apparatus according to claim 4, wherein:

an encoding section, the inverting section and the decoding section perform processing of a plurality of speech; and

the calculating section calculates an average bit sensitivity of bits for the plurality of speech.

6. The communication terminal apparatus according to claim 4, wherein the second deciding section makes decision after sorting the bit sensitivity of each bit.

7. The communication terminal apparatus according to claim 1, further comprising a local speech codec storing section that stores speech codec software downloaded in a previous telephone call,

wherein the deciding section evaluates the speech codec software stored in the local speech codec storing section preferentially over the speech codec software stored in the external apparatus.

8. The communication terminal apparatus according to claim 7, further comprising a key operating section that converts an input from an outside into an electrical signal,

wherein the local speech codec storing section allows content of stored speech codec software to be operated by an operation of the key operating section.

9. The communication terminal apparatus according to claim 1, further comprising a key operating section that converts an input from an outside into an electrical signal,

wherein the deciding section allows speech codec software to be selected as an evaluation target by an operation of the key operating section.

10. The communication terminal apparatus according to claim 1, wherein the deciding section decides whether or not communication is possible using the speech codec software stored in the codec controlling section, using a first synthesized sound obtained by decoding encoded speech data outputted from the codec controlling section.

11. The communication terminal apparatus according to claim 10, wherein the deciding section further comprises:

a test data storing section that stores test data;

a speech codec software storing section that stores same software as the speech codec software stored in the codec controlling section;

a first decoding section that finds the first synthesized sound acquired by decoding the encoded speech data outputted from the codec controlling section using the speech codec software stored in the speech codec software storing section; and

a difference evaluating/deciding section that, when a correlation value between the test data and the first synthesized sound is greater than a first reference value, decides that communication is possible using the speech codec software stored in the codec controlling section.

12. The communication terminal apparatus according to claim 11, wherein:

the deciding section further comprises:

an encoding section that encodes the first synthesized sound and finds synthesized sound encoded data using the speech codec software stored in the speech codec software storing section; and

a second decoding section that decodes the synthesized sound encoded data and finds a second synthesized sound using the speech codec software stored

24

in the speech codec software storing section; and
when a correlation value between the first synthesized sound and the second synthesized sound is greater than a predetermined second reference value, the difference evaluating/deciding section decides that communication is possible using the speech codec software stored in the codec controlling section.

13. The communication terminal apparatus according to claim 1, wherein the external apparatus is a base station apparatus.

14. The communication terminal apparatus according to claim 1, wherein the external apparatus is a codec distributing center other than a base station apparatus.

15. A communication system that comprises a communication terminal apparatus and a base station apparatus, wherein:

the base station apparatus comprises a storing section that stores speech codec software; and
the communication terminal apparatus comprises:

a deciding section that decides whether or not the speech codec software is suitable for downloading; and
a codec controlling section that, when the deciding section decides that the speech codec software is suitable for downloading, encodes and decodes speech using the speech codec software downloaded from the storing section.

16. A communication method comprising:

deciding whether or not speech codec software stored in an external apparatus is suitable for downloading; and
when the speech codec software is decided to be suitable for downloading, encoding and decoding speech using the speech codec software downloaded from the external apparatus.

FIG.1

(BIT)

| | | |
|---|---|---|
| LSP | 18 | |
| ADAPTIVE CODEBOOK<br>FIXED CODEBOOK<br>GAIN | 9<br>17<br>7 | 5<br>17<br>7 |
| TOTAL | 80 | |

## FIG.2

| |
|---|
| BIT ALLOCATION INFORMATION |
| SPEECH CODEC SOFTWARE<br>(BODY) |

MEMORY ADDRESS

## FIG.3

FIG.4

FIG.5

FIG.6

EP 2 192 578 A1

FIG.7

FIG.8

FIG.9

EP 2 192 578 A1

EP 2 192 578 A1

INVERTED BIT NUMBER OF REFERENCE ENCODED DATA

FIG.10

FIG.11

FIG.12

EP 2 192 578 A1

EP 2 192 578 A1

(a)

| 0 | 1 | 2 | $\cdots$ | 35 | 36 | $\cdots\cdots\cdots$ | 80 |
|---|---|---|---|---|---|---|---|

(b)

| 0 | 1 | 2 | $\cdots\cdots\cdots$ | 64 | 65 | $\cdots$ | 80 |
|---|---|---|---|---|---|---|---|

(c)

| 0 | 1 | 2 | $\cdots\cdots\cdots$ | 64 | 65 | $\cdots$ | 80 |
|---|---|---|---|---|---|---|---|

(d)

| 0 | 1 | 2 | $\cdots$ | 35 | 36 | $\cdots\cdots\cdots$ | 80 |
|---|---|---|---|---|---|---|---|

FIG.13

FIG.14

EP 2 192 578 A1

QUANTIZATION TARGET VECTOR OF ORDER 10

```
            ┌─────────────────────┐
            │    PERFORM VQ OF     │
            │    ALL USING 7 BITS  │
            └─────────────────────┘
            ┌─────────────────────┐
            │  FIND QUANTIZATION   │
            │   ERROR VECTORS      │
            └─────────────────────┘
```

→ ENCODED DATA

```
┌─────────────────────────┐   ┌─────────────────────────┐
│ PERFORM VQ OF FIRST HALF │   │ PERFORM VQ OF SECOND HALF│
│      USING 5 BITS        │   │      USING 5 BITS        │
└─────────────────────────┘   └─────────────────────────┘
```

FIG.15

QUANTIZATION TARGET VECTOR

```
            ┌─────────────────────┐
            │    PERFORM VQ OF     │
            │    ALL USING 7 BITS  │
            └─────────────────────┘
            ┌─────────────────────┐
            │  FIND QUANTIZATION   │
            │   ERROR VECTORS      │
            └─────────────────────┘
            ┌─────────────────────┐
            │ PERFORM VQ USING 5 BITS │
            └─────────────────────┘
            ┌─────────────────────┐
            │  FIND QUANTIZATION   │
            │   ERROR VECTORS      │
            └─────────────────────┘
            ┌─────────────────────┐
            │ PERFORM VQ USING 5 BITS │
            └─────────────────────┘
```

→ ENCODED DATA

FIG.16

| PULSE 0 | 0, 5, 10, 15, 20, 25, 30, 35 |
|---|---|
| PULSE 1 | 1, 6, 11, 16, 21, 26, 31, 36 |
| PULSE 2 | 2, 7, 12, 17, 22, 27, 32, 37 |
| PULSE 3 | 3, 8, 13, 18, 23, 28, 33, 38,<br>4, 9, 14, 19, 24, 29, 34, 39 |

FIG.17

| PULSE 0 | 37, 22, 17, 12, 27, 7, 32, 2 |
|---|---|
| PULSE 1 | 20, 5, 15, 35, 0, 30, 10, 25 |
| PULSE 2 | 11, 31, 21, 36, 1, 26, 6, 16 |
| PULSE 3 | 24, 14, 39, 4, 19, 28, 9, 34,<br>18, 33, 8, 23, 3, 29, 38, 13 |

FIG.18

EP 2 192 578 A1

TO WIRELESS TERMINAL APPARATUS 140 ◀
FROM WIRELESS TERMINAL APPARATUS 140 ▶

CODEC CONTROLLING SECTION — 154A

153A
DECIDING SECTION

501
TEST DATA STORING SECTION

502
SPEECH CODEC SOFTWARE STORING SECTION

503
DECODING SECTION

504
ENCODING SECTION

505
DECODING SECTION

506
DIFFERENCE EVALUATING/ DECIDING SECTION

DECISION RESULT ●━━━━━━━━▶ TO BASE STATION APPARATUS 160

TO AV CONTROLLING/OUTPUTTING SECTION 152

FIG.19

| INTERNATIONAL SEARCH REPORT | International application No. |
|---|---|
| | PCT/JP2008/002593 |

A.  CLASSIFICATION OF SUBJECT MATTER
*G10L19/14(2006.01)i, H04M1/00(2006.01)i, H04M11/00(2006.01)i*

According to International Patent Classification (IPC) or to both national classification and IPC

B.  FIELDS SEARCHED

Minimum documentation searched (classification system followed by classification symbols)
G10L19/14, H04M1/00, H04M11/00

Documentation searched other than minimum documentation to the extent that such documents are included in the fields searched
Jitsuyo Shinan Koho           1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2005-251028 A  (NEC Saitama, Ltd.),<br>15 September, 2005 (15.09.05),<br>Claim 1; Par. No. [0002]<br>(Family: none) | 1-3,7-16 |
| A | JP 7-244129 A  (AT & T Corp.),<br>19 September, 1995 (19.09.95),<br>Full text; all drawings<br>& US 5483237 A          & EP 665442 A1 | 1-16 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 December, 2008 (02.12.08) | 16 December, 2008 (16.12.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

**Patent documents cited in the description**

- JP 2003051867 A
- JP 2007246269 A
- JP 2008115665 A